(19) Europäisches Patentamt
European Patent Office
Office européen des brevets

(11) **EP 4 206 737 A1**

(12) **EUROPEAN PATENT APPLICATION**

(43) Date of publication:
05.07.2023 Bulletin 2023/27

(21) Application number: 22215731.5

(22) Date of filing: 22.12.2022

(51) International Patent Classification (IPC):
**G01S 17/89** (2020.01)    **G01S 17/931** (2020.01)

(52) Cooperative Patent Classification (CPC):
**G01S 7/484; G01S 17/894; G01S 17/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 US 202117563810**

(71) Applicant: **Nio Technology (Anhui) Co., Ltd Hefei City, Anhui 230601 (CN)**

(72) Inventors:
• THAKUR, Anubhav
  San Francisco, CA 94158 (US)
• CHEN, Waylon Y.
  San Jose, CA 95123 (US)
• AGRAWAL, Samir
  Milpitas, CA 95035 (US)
• SAMSON, Matthew L.
  San Jose, CA 95133 (US)

(74) Representative: **Vossius & Partner Patentanwälte Rechtsanwälte mbB Siebertstraße 3 81675 München (DE)**

(54) **TIME OF FLIGHT CAMERAS USING PASSIVE IMAGE SENSORS AND EXISTING LIGHT SOURCES**

(57)    A vehicle may perform time of flight (ToF) calculations or determinations using passive sensors (e.g., passive image sensors) with existing onboard vehicle light sources to generate depth data and a depth image of a scene surrounding the vehicle. For example, the vehicle may use an automotive camera (e.g., a passive sensor that does not emit light) and may pair the camera with one or more light sources on the vehicle to construct a ToF camera. To accomplish this construction of a ToF camera using existing automotive cameras and existing light sources, a controller of the vehicle synchronizes the passive automotive cameras to the onboard light sources. In some examples, the vehicle can enable a high dynamic range (HDR) for the ToF cameras by varying properties of the light emitted from the light sources.

*Fig. 1*

EP 4 206 737 A1

**Description**

FIELD

The present disclosure is generally directed to vehicle systems, in particular, toward time of flight (ToF) determinations in vehicle systems.

BACKGROUND

In recent years, transportation methods have changed substantially. This change is due in part to a concern over the limited availability of natural resources, a proliferation in personal technology, and a societal shift to adopt more environmentally friendly transportation solutions. These considerations have encouraged the development of a number of new flexible-fuel vehicles, hybrid-electric vehicles, and electric vehicles.

While these vehicles appear to be new, they are generally implemented as a number of traditional subsystems that are merely tied to an alternative power source. In fact, the design and construction of the vehicles is limited to standard frame sizes, shapes, materials, and transportation concepts. Among other things, these limitations fail to take advantage of the benefits of new technology, power sources, and support infrastructure. In particular, the vehicles may fail to leverage or utilize different technologies, sensors, and equipment for performing time of flight (ToF) determinations or calculations for different purposes (e.g., for assisting in autonomous driving operations, determining passengers within the vehicle, etc.).

BRIEF DESCRIPTION OF THE DRAWINGS

Fig. 1 shows a vehicle in accordance with embodiments of the present disclosure;
Fig. 2 shows a plan view of the vehicle in accordance with at least some embodiments of the present disclosure;
Fig. 3A is a block diagram of an embodiment of a communication environment of the vehicle in accordance with embodiments of the present disclosure;
Fig. 3B is a block diagram of an embodiment of interior sensors within the vehicle in accordance with embodiments of the present disclosure;
Fig. 3C is a block diagram of an embodiment of a navigation system of the vehicle in accordance with embodiments of the present disclosure;
Fig. 4 shows an embodiment of the instrument panel of the vehicle according to one embodiment of the present disclosure;
Fig. 5 is a block diagram of an embodiment of a communications subsystem of the vehicle;
Fig. 6 is a block diagram of a computing environment associated with the embodiments presented herein;
Fig. 7 is a block diagram of a computing device associated with one or more components described herein;
Fig. 8 is an example block diagram illustrating time of flight (ToF) determinations using passive image sensors and existing light sources in accordance with aspects of the present disclosure;
Fig. 9 is an example light source operation for performing ToF determinations in accordance with aspects of the present disclosure;
Fig. 10 is an example sensor operation for performing ToF determinations in accordance with aspects of the present disclosure; and
Figs. 11-12 are flowcharts illustrating aspects of the present disclosure.

DETAILED DESCRIPTION

Time of flight (ToF) sensors have been developed to determine the range from a camera (e.g., or similar sensor or piece of equipment) to an object. For example, ToF cameras are active sensors capable of both emitting and receiving light. The ToF camera sends out pulses of light with known characteristics (e.g., pulsing signal, pulsing frequency, spectral makeup, intensity, etc.) and measures the elapsed time between light emission and the sensor receiving back the reflected light. Based on the elapsed time between sending out the light pulses and receiving the reflected light pulses, the distance between the ToF camera and a reflecting target (e.g., any objects in the vicinity of the ToF camera) can be calculated based on the speed of light.

In a typical implementation, a sensor system includes a light source that outputs light at a selected wavelength or range of wavelengths. The sensor system may optionally include an optical bandpass or longpass filter. The time required for the light to be output from the light source, reflect off an object within a field of view of the ToF camera (e.g.,

reflecting target), and return to the sensor can be used to calculate the range or distance from the ToF camera to the object. In some implementations, as described herein, a vehicle may use ToF sensors and cameras (e.g., Light Imaging, Detection, And Ranging (LIDAR) sensors or other ranging and imaging systems) for detecting objects outside or inside the vehicle for different purposes (e.g., for assisting in autonomous driving operations, determining passengers within the vehicle, etc.). However, operation of a ToF sensor and camera is relatively power intensive and has a limited purpose (i.e., depth detection).

Some vehicles include multiple cameras and sensors for different intended purposes. For example, vehicles may include cameras and sensors to enable autonomous operations of the vehicle (e.g., autonomous driving), aid a driver or operator of the vehicle (e.g., cameras for reversing and parking, navigation, etc.), or perform additional operations of the vehicle. Unlike ToF cameras, these cameras and sensors (e.g., traditional automotive cameras) are passive sensors. That is, these passive cameras and sensors do not emit light nor require such an ability to function. However, these sensors are passive and do not have the ability to determine distance to a target without resource intensive computer vision post-processing of the scene.

In addition to the multiple cameras and sensors on a vehicle, the vehicle may also include one or more light sources intended to serve additional purposes or aid in the operation of the cameras and sensors. For example, a vehicle can include different onboard light sources, such as, but not limited to, headlights, taillights, turn signals, additional blinkers, backup lights, in-cabin lights, ground illumination, etc. However, these light sources on a vehicle may be passive as well in that the light sources are capable of emitting light but not capable of sensing light or generating information based on sensed light, and thus, incapable of determining distances to targets (e.g., performing ToF determinations) similar to existing relatively power-intensive cameras designated for depth or distance detection.

As described herein, a vehicle may perform ToF calculations or determinations using passive sensors (e.g., passive image sensors) with existing onboard vehicle light sources (e.g., passive light sources). For example, the vehicle may use a traditional automotive camera, which is a passive sensor that does not emit light, and may pair the camera with various light sources on the vehicle to construct a ToF camera capable of providing depth information. To accomplish this construction of a ToF camera using automotive cameras and light sources, the vehicle (e.g., or a controller in the vehicle) synchronizes the passive automotive cameras to the onboard light sources.

As an example, the vehicle may use a backup camera and taillights to form or construct the ToF camera. In this example, an electronic signal is sent from the taillight to the backup camera (e.g., over a physical cable) at the start of each light pulse emitted from the taillight (e.g., light-emitting diode (LED) taillights are pulsed when in operation and halogen taillights can be made to pulse). The backup camera receives this electronic signal and starts an internal timer. The internal timer is stopped when the backup camera receives the light pulse emitted from the taillight that has now reflected from the surrounding environment behind the vehicle. The calculation for the distance between the ToF camera (e.g., backup camera coupled with the taillights in this example) to any reflecting objects is given by Equations 1 and 2 below. Equation 2 can be viewed as a generic representation of Equation 1, where d represents the "distance," t represents the "internal timer readout," and c represents the speed of light.

$$distance = internal\ timer\ readout * speed\ of\ light * 0.5 \qquad (1)$$

$$d = \frac{c * t}{2} \qquad (2)$$

While discussed with the example of a backup camera and taillights, this same concept for calculating and determining distance to an object can be applied with other combinations of automotive cameras and onboard light sources around the vehicle. For example, the vehicle may form a ToF camera using a turn signal on fender combined with a camera on a side view mirror, a headlight combined with a front parking camera, a headlight combined with one or more front advanced driver assistance system (ADAS) cameras, or additional suitable light sources and suitable sensors of a vehicle.

Additionally, the vehicle can enable a high dynamic range (HDR) for the ToF cameras using the automotive cameras and various light sources. In some examples, the one or more light sources include large-sized light sources (e.g., larger sized headlights), have a discretization of components within the light sources (e.g., active elements are separated from passive sensors within the light sources), or both. Based on these characteristics of the light sources, a dynamic range of the system described herein can be improved. For example, the intensity and/or frequency of the pulses being emitted by the light sources can be increased or decreased depending on a level of "noise" being generated in a sensor output. This adjustment of the intensity and/or frequency of the pulses may be used for scenarios where there are multiple objects of varying reflectivity in a same scene. That is, the light sources can be pulsed at varying intensity and/or frequency, thereby enabling the camera to capture images from objects of both low and high reflectivity.

The low reflectivity and the high reflectivity images can be superimposed according to suitable HDR techniques to form an HDR ToF image (e.g., a depth image of the scene with both bright and dark areas).

In some examples, the vehicle can vary the number of LEDs pulsed for a light source as part of the ToF camera described herein. For example, the vehicle may start with pulsing a small cluster of LEDs for the ToF camera and can add more LEDs until a range is satisfied for performing the ToF calculations. In some examples, the vehicle may use a same camera intended for HDR but with different pulsed lights. Additionally, the light sources can be made to operate independently of one another and can thereby be used to illuminate different areas around the vehicle independently for multiple passive sensors placed on different locations around the vehicle.

In some examples, the vehicle may construct multiple ToF cameras around the vehicle using multiple automotive cameras or sensors and multiple light sources. For example, the vehicle can support multiple ToF cameras using passive sensors (e.g., cameras) placed all around the vehicle that are synchronized with different light sources. In some examples, multiple cameras (e.g., passive sensors) can be synchronized with a same light source to expand the effective field of view of the system. That is, the vehicle can have multiple cameras sensing from one light source, thereby expanding the field of view that can be captured from a single light source.

Additionally, when operating and constructing the ToF camera, the vehicle may employ a variable camera field of view for the ToF camera. For example, depending on the speed of the vehicle, the vehicle (e.g., or a controller within the vehicle) can actuate the light sources (e.g., headlights) such that the conical angle of beams emitted from the light sources is wider at lower speeds and narrower at higher speeds. In some examples, the vehicle may adjust the conical angle of beams emitted from the light sources through the use of small electric motors built into casings of the light sources (e.g., or into individual lights of the light sources), which react to information provided by sensors on or in the vehicle to determine how fast the vehicle is going, how far a driver has turned the steering wheel of the vehicle, whether the vehicle is going up an incline or down a decline, etc., to adjust the light sources accordingly. Additionally or alternatively, if a light source includes multiple individual lights (e.g., a headlight can include multiple LEDs), the vehicle can selectively turn on or extinguish a subset of the individual lights to adjust the conical angle or additional characteristics of beams emitted from the light sources. This actuation or adjustment of the light sources may enable the system (e.g., vehicle/controller operating the constructed ToF camera) to collect depth and angular position information at a higher resolution based on the driving speed of the vehicle. Additionally or alternatively, the vehicle may use small and large field of view cameras for detecting different parts of scenes of the surrounding environment around the vehicle.

In some examples, the vehicle may employ one or more additional features to enhance operations of a ToF sensor system constructed of existing cameras and sensors on the vehicle combined with light sources used by the vehicle. For example, the vehicle (e.g., via the controller) can expand wavelengths of the light sources (e.g., headlights) to enable the cameras/sensors to better identify the emitted light from the light sources reflected off the surrounding area back to the cameras/sensors. Additionally or alternatively, the vehicle can use a full replacement for the cameras/sensors, where the cameras/sensors are fully modified to monitor for reflected light from the light sources (e.g., all pixels of the cameras/sensors are controlled to monitor for the reflected light), or the vehicle may have partially modified cameras/sensors to monitor for the reflected light (e.g., a subset of pixels of the cameras/sensors are controlled to monitor for the reflected light). In some examples, the system and ToF camera described herein can be used for both direct ToF calculations and/or indirect ToF calculations, where direct ToF calculations use Equations 1 and 2 above while indirect ToF calculations involve using different phases for emitted light from the light sources to calculate distance to nearby objects.

The present disclosure can provide cameras, systems, or devices for ToF calculations that are capable of improved power consumption, data transmission, and data processing efficiencies. For example, instead of using relatively power intensive sensors dedicated to ToF determinations (e.g., LIDAR sensors or other ranging and imaging systems), the present disclosure can leverage existing sensors (e.g., cameras) and light sources on a vehicle to perform ToF calculations. Embodiments of the present disclosure will be described in connection with a vehicle, and in some embodiments, an electric vehicle, rechargeable electric vehicle, and/or hybrid-electric vehicle and associated systems. Hereinafter, embodiments of the present disclosure will be described in detail on the basis of the accompanying drawings. Further, in the following embodiments, the same reference numeral will be given to the same or equivalent portion or element, and redundant description thereof will be omitted.

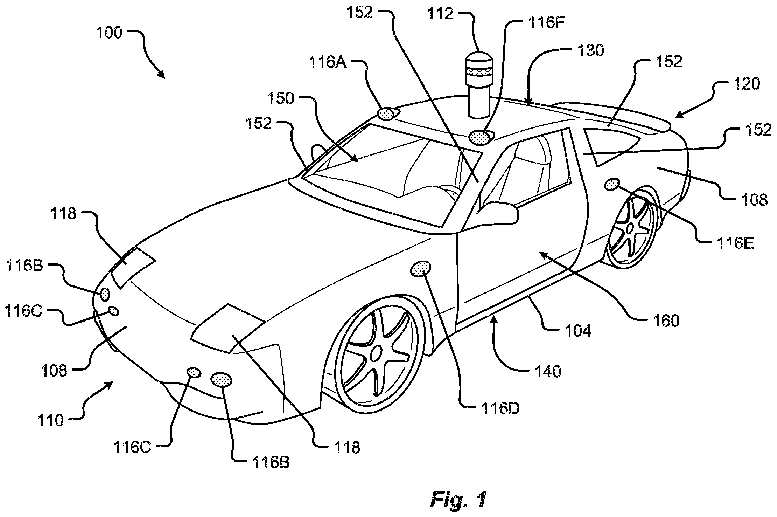

Fig. 1 shows a perspective view of a vehicle 100 in accordance with embodiments of the present disclosure. The vehicle 100 comprises a vehicle front 110, a vehicle aft or rear, a vehicle roof 130, at least one vehicle side 160, a vehicle undercarriage 140, and a vehicle interior 150 (e.g., interior space). In any event, the vehicle 100 may include a frame 104 and one or more body panels 108 mounted or affixed thereto. The vehicle 100 may include one or more interior components (e.g., components inside the vehicle interior 150, or user space, of a vehicle 100, etc.), exterior components (e.g., components outside of the vehicle interior 150, or user space, of a vehicle 100, etc.), drive systems, controls systems, structural components, etc.

Although shown in the form of a car, it should be appreciated that the vehicle 100 described herein may include any conveyance or model of a conveyance, where the conveyance was designed for the purpose of moving one or more tangible objects, such as people, animals, cargo, and the like. The term "vehicle" does not require that a conveyance moves or is capable of movement. Typical vehicles may include but are in no way limited to cars, trucks, motorcycles, busses, automobiles, trains, railed conveyances, boats, ships, marine conveyances, submarine conveyances, airplanes, space craft, flying machines, human-powered conveyances, and the like.

In some embodiments, the vehicle 100 may include a number of sensors, devices, and/or systems that are capable of assisting in driving operations, e.g., autonomous or semi-autonomous control. Examples of the various sensors and systems may include, but are in no way limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR systems, odometry sensors and/or devices (e.g., encoders, etc.), orientation sensors (e.g., accelerometers, gyroscopes, magnetometer, etc.), navigation sensors and systems (e.g., global positioning system (GPS), etc.), and other ranging, imaging, and/or object-detecting sensors. The sensors may be disposed in the vehicle interior 150 of the vehicle 100 and/or on an outside of the vehicle 100. In some embodiments, the sensors and systems may be disposed in one or more portions of the vehicle 100 (e.g., the frame 104, a body panel, a compartment, etc.).

The vehicle sensors and systems may be selected and/or configured to suit a level of operation associated with the vehicle 100. Among other things, the number of sensors used in a system may be altered to increase or decrease information available to a vehicle control system (e.g., affecting control capabilities of the vehicle 100). Additionally or alternatively, the sensors and systems may be part of one or more ADASs associated with a vehicle 100. In any event, the sensors and systems may be used to provide driving assistance at any level of operation (e.g., from fully-manual to fully-autonomous operations, etc.) as described herein.

The various levels of vehicle control and/or operation can be described as corresponding to a level of autonomy associated with a vehicle 100 for vehicle driving operations. For instance, at Level 0, or fully-manual driving operations, a driver (e.g., a human driver) may be responsible for all the driving control operations (e.g., steering, accelerating, braking, etc.) associated with the vehicle. Level 0 may be referred to as a "No Automation" level. At Level 1, the vehicle may be responsible for a limited number of the driving operations associated with the vehicle, while the driver is still responsible for most driving control operations. An example of a Level 1 vehicle may include a vehicle in which the throttle control and/or braking operations may be controlled by the vehicle (e.g., cruise control operations, etc.). Level 1 may be referred to as a "Driver Assistance" level. At Level 2, the vehicle may collect information (e.g., via one or more driving assistance systems, sensors, etc.) about an environment of the vehicle (e.g., surrounding area, roadway, traffic, ambient conditions, etc.) and use the collected information to control driving operations (e.g., steering, accelerating, braking, etc.) associated with the vehicle. In a Level 2 autonomous vehicle, the driver may be required to perform other aspects of driving operations not controlled by the vehicle. Level 2 may be referred to as a "Partial Automation" level. It should be appreciated that Levels 0-2 all involve the driver monitoring the driving operations of the vehicle.

At Level 3, the driver may be separated from controlling all the driving operations of the vehicle except when the vehicle makes a request for the operator to act or intervene in controlling one or more driving operations. In other words, the driver may be separated from controlling the vehicle unless the driver is required to take over for the vehicle. Level 3 may be referred to as a "Conditional Automation" level. At Level 4, the driver may be separated from controlling all the driving operations of the vehicle, and the vehicle may control driving operations even when a user fails to respond to a request to intervene. Level 4 may be referred to as a "High Automation" level. At Level 5, the vehicle can control all the driving operations associated with the vehicle in all driving modes. The vehicle in Level 5 may continually monitor traffic, vehicular, roadway, and/or environmental conditions while driving the vehicle. In Level 5, there is no human driver interaction required in any driving mode. Accordingly, Level 5 may be referred to as a "Full Automation" level. It should be appreciated that in Levels 3-5 the vehicle, and/or one or more automated driving systems associated with the vehicle, monitors the driving operations of the vehicle and the driving environment. Here, it should be appreciated that example embodiments may be used with other automation levels not specifically identified herein.

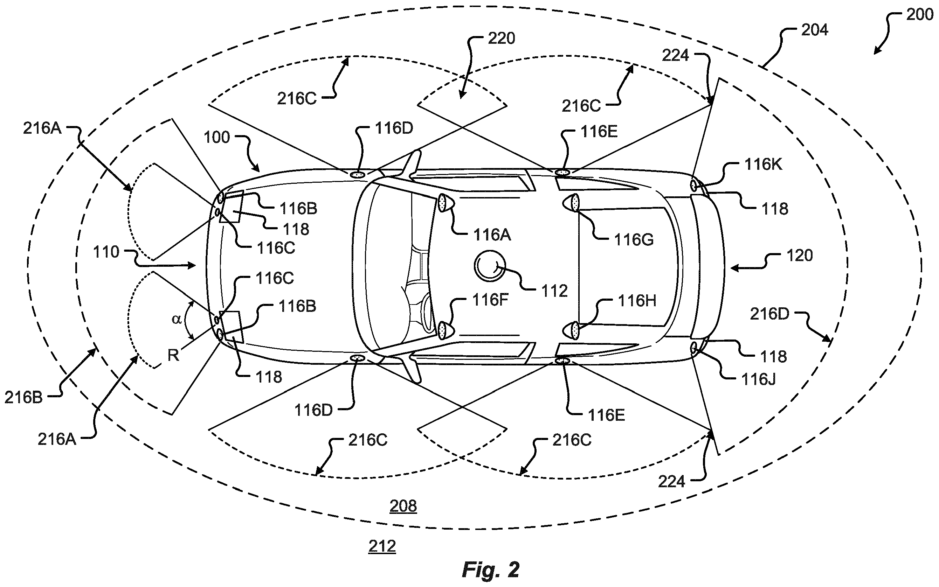

As shown in Fig. 1, the vehicle 100 may, for example, include at least one of a ranging and imaging system 112 (e.g., LIDAR, etc.), an imaging sensor 116A, 116F (e.g., a camera for color image generator, an IR sensor, etc.), a radio object-detection and ranging system sensors 116B (e.g., RADAR, RF, etc.), ultrasonic sensors 116C, and/or other object-detection sensors 116D, 116E. In some embodiments, the LIDAR system 112 and/or sensors may be mounted on a roof 130 of the vehicle 100. In one embodiment, the RADAR sensors 116B may be disposed at least at a front 110, aft 120, or side 160 of the vehicle 100. Among other things, the RADAR sensors may be used to monitor and/or detect a position of other vehicles, pedestrians, and/or other objects near, or proximal to, the vehicle 100. While shown associated with one or more areas of a vehicle 100, it should be appreciated that any of the sensors and systems 116A-K, 112 illustrated in Figs. 1 and 2 may be disposed in, on, and/or about the vehicle 100 in any position, area, and/or zone of the vehicle 100.

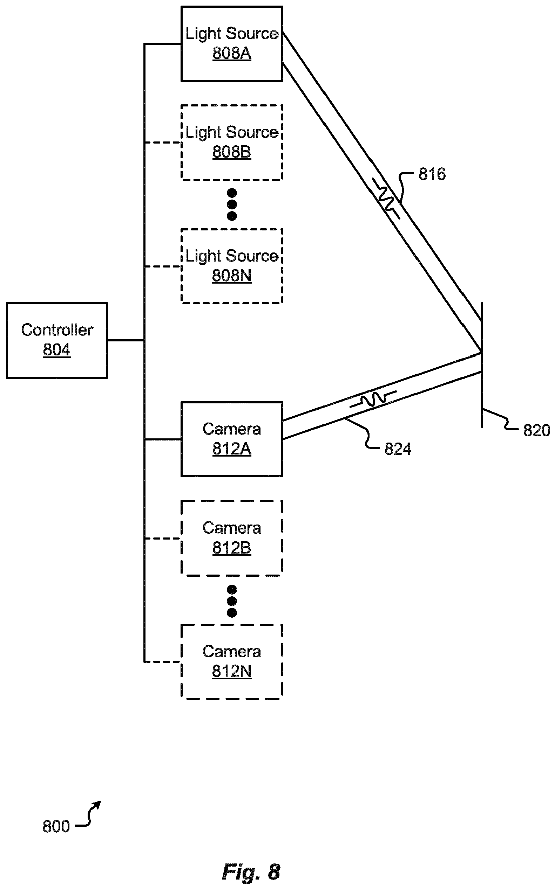

As described in more detail with reference to Figs. 8-12, one or more of the sensors and systems 116A-K, 112 illustrated in Figs. 1 and 2 may include passive cameras that can be synchronized with at least one light source 118 on the vehicle 100 to form a ToF sensor system on an ad hoc basis. For example, the vehicle 100 may form a ToF camera from a light source 118 (e.g., headlight, taillight, turn signal, etc.) and a passive image sensor 116 (e.g., a camera, such as a camera on a side view mirror, a front parking camera, an ADAS camera, etc.). In this case, the light source 118 and the sensor 116 are synchronized and controlled by the vehicle 100 (e.g., via a controller in the vehicle 100) to perform ToF determinations and calculations. That is, the vehicle 100 may control the light source 118 to emit a light with certain characteristics such that the sensor 116 is capable of sensing the light reflected off any nearby objects in the surrounding area around the vehicle to perform ToF calculations for determining the distance to these nearby objects from the vehicle 100. In some examples, these ToF calculations are then used to support autonomous, semi-autonomous, manual driving operations, or a combination thereof.

The vehicle 100 can toggle or switch between the ToF system that uses passive components as described herein (e.g., a passive camera and passive light source that have been synchronized to form a ToF system) and a ToF system with the dedicated purpose of performing distance measurements (e.g., LIDAR sensors or other ranging and imaging systems). For example, the vehicle 100 may toggle between the ToF system that uses the passive components and the ToF system intended for distance measurements based on whether the vehicle 100 is operating in a low power mode (e.g., the low power mode corresponds to using the ToF system that uses passive components that consume less power than power-intensive LIDAR systems), an input from a driver of the vehicle 100 (e.g., to toggle either ToF system), information from the sensors and systems 116A-K, 112 (e.g., a corresponding ToF system can be toggled based on different exterior conditions for the vehicle 100, such as whether it is raining, night or day, etc.), or based on a different trigger not expressly indicated herein. In some examples, the low power mode can be selected or input by a driver of the vehicle 100 or can be activated by sensors or a controller of the vehicle 100 (e.g., if a battery power of the vehicle 100 drops below a threshold value).

Referring now to Fig. 2, a plan view of a vehicle 100 will be described in accordance with embodiments of the present disclosure. In particular, Fig. 2 shows a vehicle sensing environment 200 at least partially defined by the sensors and systems 116A-K, 112 disposed in, on, and/or about the vehicle 100. Each sensor 116A-K may include an operational detection range R and operational detection angle. The operational detection range R may define the effective detection limit, or distance, of the sensor 116A-K. In some cases, this effective detection limit may be defined as a distance from a portion of the sensor 116A-K (e.g., a lens, sensing surface, etc.) to a point in space offset from the sensor 116A-K. The effective detection limit may define a distance, beyond which, the sensing capabilities of the sensor 116A-K deteriorate, fail to work, or are unreliable. In some embodiments, the effective detection limit may define a distance, within which, the sensing capabilities of the sensor 116A-K are able to provide accurate and/or reliable detection information. The operational detection angle may define at least one angle of a span, or between horizontal and/or vertical limits, of a sensor 116A-K. As can be appreciated, the operational detection limit and the operational detection angle of a sensor 116A-K together may define the effective detection zone 216A-D (e.g., the effective detection area, and/or volume, etc.) of a sensor 116A-K.

In some embodiments, the vehicle 100 may include a ranging and imaging system 112 such as LIDAR, or the like. The ranging and imaging system 112 may be configured to detect visual information in an environment surrounding the vehicle 100. The visual information detected in the environment surrounding the ranging and imaging system 112 may be processed (e.g., via one or more sensor and/or system processors, etc.) to generate a complete 360-degree view of an environment 200 around the vehicle. The ranging and imaging system 112 may be configured to generate changing 360-degree views of the environment 200 in real-time, for instance, as the vehicle 100 drives. In some cases, the ranging and imaging system 112 may have an effective detection limit 204 that is some distance from the center of the vehicle 100 outward over 360 degrees. The effective detection limit 204 of the ranging and imaging system 112 defines a view zone 208 (e.g., an area and/or volume, etc.) surrounding the vehicle 100. Any object falling outside of the view zone 208 is in the undetected zone 212 and would not be detected by the ranging and imaging system 112 of the vehicle 100.

Sensor data and information may be collected by one or more sensors or systems 116A-K, 112 of the vehicle 100 monitoring the vehicle sensing environment 200. This information may be processed (e.g., via a processor, computer-vision system, etc.) to determine targets (e.g., objects, signs, people, markings, roadways, conditions, etc.) inside one or more detection zones 208, 216A-D associated with the vehicle sensing environment 200. In some cases, information from multiple sensors 116A-K may be processed to form composite sensor detection information. For example, a first sensor 116A and a second sensor 116F may correspond to a first camera 116A and a second camera 116F aimed in a forward traveling direction of the vehicle 100. In this example, images collected by the cameras 116A, 116F may be combined to form stereo image information. This composite information may increase the capabilities of a single sensor in the one or more sensors 116A-K by, for example, adding the ability to determine depth associated with targets in the one or more detection zones 208, 216A-D. The same or similar image data may be collected by rear view cameras (e.g., sensors 116G, 116H) aimed in a rearward traveling direction vehicle 100.

In some embodiments, multiple sensors 116A-K may be effectively joined to increase a sensing zone and provide increased sensing coverage. For instance, multiple RADAR sensors 116B disposed on the front 110 of the vehicle may be joined to provide a zone 216B of coverage that spans across an entirety of the front 110 of the vehicle.

In some cases, the multiple RADAR sensors 116B may cover a detection zone 216B that includes one or more other sensor detection zones 216A. These overlapping detection zones may provide redundant sensing, enhanced sensing, and/or provide greater detail in sensing within a particular portion (e.g., zone 216A) of a larger zone (e.g., zone 216B). Additionally or alternatively, the sensors 116A-K of the vehicle 100 may be arranged to create a complete coverage, via one or more sensing zones 208, 216A-D around the vehicle 100. In some areas, the sensing zones 216C of two or more sensors 116D, 116E may intersect at an overlap zone 220. In some areas, the angle and/or detection limit of two or more sensing zones 216C, 216D (e.g., of two or more sensors 116E, 116J, 116K) may meet at a virtual intersection point 224.

The vehicle 100 may include a number of sensors 116E, 116G, 116H, 116J, 116K disposed proximal to the rear 120 of the vehicle 100. These sensors can include, but are in no way limited to, an imaging sensor, camera, IR, a radio object-detection and ranging sensors, RADAR, RF, ultrasonic sensors, and/or other object-detection sensors. Among other things, these sensors 116E, 116G, 116H, 116J, 116K may detect targets near or approaching the rear of the vehicle 100. For example, another vehicle approaching the rear 120 of the vehicle 100 may be detected by one or more of the ranging and imaging system (e.g., LIDAR) 112, rear-view cameras 116G, 116H, and/or rear facing RADAR sensors 116J, 116K. As described above, the images from the rear-view cameras 116G, 116H may be processed to generate a stereo view (e.g., providing depth associated with an object or environment, etc.) for targets visible to both cameras 116G, 116H. As another example, the vehicle 100 may be driving and one or more of the ranging and imaging system 112, front-facing cameras 116A, 116F, front-facing RADAR sensors 116B, and/or ultrasonic sensors 116C may detect targets in front of the vehicle 100. This approach may provide critical sensor information to a vehicle control system in at least one of the autonomous driving levels described above. For instance, when the vehicle 100 is driving autonomously (e.g., Level 3, Level 4, or Level 5) and detects other vehicles stopped in a travel path, the sensor detection information may be sent to the vehicle control system of the vehicle 100 to control a driving operation (e.g., braking, decelerating, etc.) associated with the vehicle 100 (in this example, slowing the vehicle 100 as to avoid colliding with the stopped other vehicles). As yet another example, the vehicle 100 may be operating and one or more of the ranging and imaging system 112, and/or the side-facing sensors 116D, 116E (e.g., RADAR, ultrasonic, camera, combinations thereof, and/or other type of sensor), may detect targets at a side of the vehicle 100. It should be appreciated that the sensors 116A-K may detect a target that is both at a side 160 and a front 110 of the vehicle 100 (e.g., disposed at a diagonal angle to a centerline of the vehicle 100 running from the front 110 of the vehicle 100 to the rear 120 of the vehicle). Additionally or alternatively, the sensors 116A-K may detect a target that is both, or simultaneously, at a side 160 and a rear 120 of the vehicle 100 (e.g., disposed at a diagonal angle to the centerline of the vehicle 100).

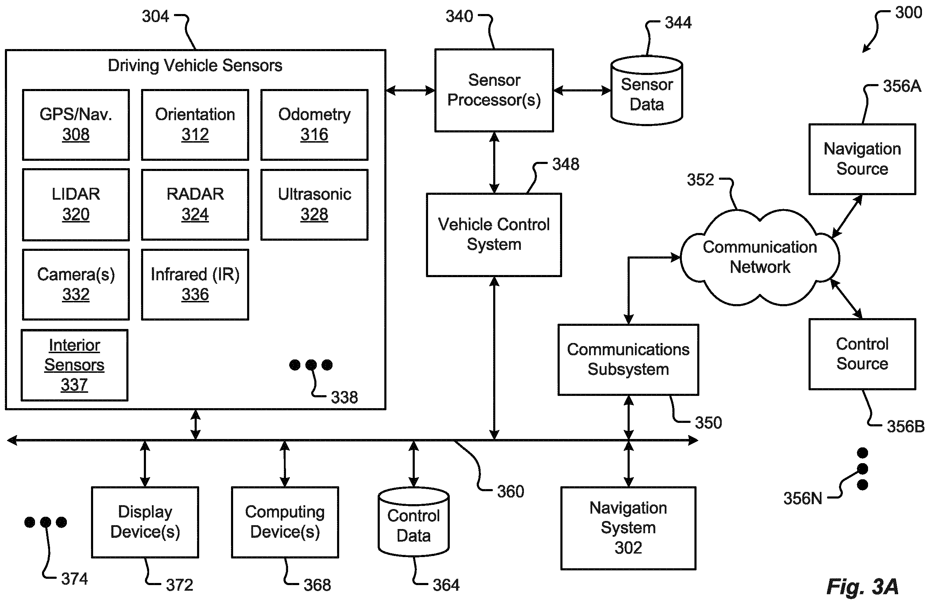

Figs. 3A-3C are block diagrams of an embodiment of a communication system 300 of the vehicle 100 in accordance with embodiments of the present disclosure. The communication system 300 may include one or more vehicle driving vehicle sensors and systems 304, sensor processors 340, sensor data memory 344, vehicle control system 348, communications subsystem 350, control data memory 364, computing devices 368, display devices 372, and other components 374 that may be associated with a vehicle 100. These associated components may be electrically and/or communicatively coupled to one another via at least one bus 360. In some embodiments, the one or more associated components may send and/or receive signals across a communication network 352 to at least one of a navigation source 356A, a control source 356B, or some other entity 356N.

In accordance with at least some embodiments of the present disclosure, the communication network 352 may comprise any type of known communication medium or collection of communication media and may use any type of protocols, such as SIP, TCP/IP, SNA, IPX, AppleTalk, and the like, to transport messages between endpoints. The communication network 352 may include wired and/or wireless communication technologies. The Internet is an example of the communication network 352 that constitutes an Internet Protocol (IP) network that includes many computers, computing networks, and other communication devices located all over the world, which are connected through many telephone systems and other means. Other examples of the communication network 352 include, without limitation, a standard Plain Old Telephone System (POTS), an Integrated Services Digital Network (ISDN), the Public Switched Telephone Network (PSTN), a Local Area Network (LAN), such as an Ethernet network, a Token-Ring network and/or the like, a Wide Area Network (WAN), a virtual network, including without limitation a virtual private network ("VPN"); the Internet, an intranet, an extranet, a cellular network, an infra-red network; a wireless network (e.g., a network operating under any of the IEEE 802.9 suite of protocols, the Bluetooth® protocol known in the art, and/or any other wireless protocol), and any other type of packet-switched or circuit-switched network known in the art and/or any combination of these and/or other networks. In addition, it can be appreciated that the communication network 352 need not be limited to any one network type, and instead may be comprised of a number of different networks and/or network types. The communication network 352 may comprise a number of different communication media such as coaxial cable, copper cable/wire, fiber-optic cable, antennas for transmitting/receiving wireless messages, and combinations thereof.

The driving vehicle sensors and systems 304 may include navigation sensor(s) 308 (e.g., GPS, etc.), orientation sensor(s) 312, odometry sensor(s) 316, LIDAR sensor(s) 320, RADAR sensor(s) 324, ultrasonic sensor(s) 328, camera(s) 332 (e.g., for color image generation), IR sensor(s) 336, and/or other sensors or systems 338. These driving vehicle sensors and systems 304 may be similar, if not identical, to the sensors and systems 116A-K, 112 described in conjunction with Figs. 1 and 2.

The navigation sensor 308 may include one or more sensors having receivers and antennas that are configured to utilize a satellite-based navigation system including a network of navigation satellites capable of providing geolocation and time information to at least one component of the vehicle 100. Examples of the navigation sensor 308 as described herein may include, but are not limited to, at least one of Garmin® GLO™ family of GPS and GLONASS combination sensors, Garmin® GPS 15x™ family of sensors, Garmin® GPS 16x™ family of sensors with high-sensitivity receiver and antenna, Garmin® GPS 18x OEM family of high-sensitivity GPS sensors, Dewetron DEWE-VGPS series of GPS sensors, GlobalSat 1-Hz series of GPS sensors, other industry-equivalent navigation sensors and/or systems, and may perform navigational and/or geolocation functions using any known or future-developed standard and/or architecture.

The orientation sensor 312 may include one or more sensors configured to determine an orientation of the vehicle 100 relative to at least one reference point. In some embodiments, the orientation sensor 312 may include at least one pressure transducer, stress/strain gauge, accelerometer, gyroscope, and/or geomagnetic sensor. Examples of the navigation sensor 308 as described herein may include, but are not limited to, at least one of Bosch Sensortec BMX 160 series low-power absolute orientation sensors, Bosch Sensortec BMX055 9-axis sensors, Bosch Sensortec BMI055 6-axis inertial sensors, Bosch Sensortec BMI160 6-axis inertial sensors, Bosch Sensortec BMF055 9-axis inertial sensors (accelerometer, gyroscope, and magnetometer) with integrated Cortex M0+ microcontroller, Bosch Sensortec BMP280 absolute barometric pressure sensors, Infineon TLV493D-A1B6 3D magnetic sensors, Infineon TLI493D-W1B6 3D magnetic sensors, Infineon TL family of 3D magnetic sensors, Murata Electronics SCC2000 series combined gyro sensor and accelerometer, Murata Electronics SCC1300 series combined gyro sensor and accelerometer, other industry-equivalent orientation sensors and/or systems, which may perform orientation detection and/or determination functions using any known or future-developed standard and/or architecture.

The odometry sensor and/or system 316 may include one or more components that is configured to determine a change in position of the vehicle 100 over time. In some embodiments, the odometry system 316 may utilize data from one or more other sensors and/or systems 304 in determining a position (e.g., distance, location, etc.) of the vehicle 100 relative to a previously measured position for the vehicle 100. Additionally or alternatively, the odometry sensors 316 may include one or more encoders, Hall speed sensors, and/or other measurement sensors/devices configured to measure a wheel speed, rotation, and/or number of revolutions made over time. Examples of the odometry sensor/system 316 as described herein may include, but are not limited to, at least one of Infineon TLE4924/26/27/28C high-performance speed sensors, Infineon TL4941plusC(B) single chip differential Hall wheel-speed sensors, Infineon TL5041plusC Giant Mangnetoresistance (GMR) effect sensors, Infineon TL family of magnetic sensors, EPC Model 25SP Accu-CoderPro™ incremental shaft encoders, EPC Model 30M compact incremental encoders with advanced magnetic sensing and signal processing technology, EPC Model 925 absolute shaft encoders, EPC Model 958 absolute shaft encoders, EPC Model MA36S/MA63S/SA36S absolute shaft encoders, Dynapar™F18 commutating optical encoder, Dynapar™HS35R family of phased array encoder sensors, other industry-equivalent odometry sensors and/or systems, and may perform change in position detection and/or determination functions using any known or future-developed standard and/or architecture.

The LIDAR sensor/system 320 may include one or more components configured to measure distances to targets using laser illumination. In some embodiments, the LIDAR sensor/system 320 may provide 3D imaging data of an environment around the vehicle 100. The imaging data may be processed to generate a full 360-degree view of the environment around the vehicle 100. The LIDAR sensor/system 320 may include a laser light generator configured to generate a plurality of target illumination laser beams (e.g., laser light channels). In some embodiments, this plurality of laser beams may be aimed at, or directed to, a rotating reflective surface (e.g., a mirror) and guided outwardly from the LIDAR sensor/system 320 into a measurement environment. The rotating reflective surface may be configured to continually rotate 360 degrees about an axis, such that the plurality of laser beams is directed in a full 360-degree range around the vehicle 100. A photodiode receiver of the LIDAR sensor/system 320 may detect when light from the plurality of laser beams emitted into the measurement environment returns (e.g., reflected echo) to the LIDAR sensor/system 320. The LIDAR sensor/system 320 may calculate, based on a time associated with the emission of light to the detected return of light, a distance from the vehicle 100 to the illuminated target. In some embodiments, the LIDAR sensor/system 320 may generate over 2.0 million points per second and have an effective operational range of at least 100 meters. Examples of the LIDAR sensor/system 320 as described herein may include, but are not limited to, at least one of Velodyne® LiDAR™ HDL-64E 64-channel LIDAR sensors, Velodyne® LiDAR™ HDL-32E 32-channel LIDAR sensors, Velodyne® LiDAR™ PUCK™ VLP-16 16-channel LIDAR sensors, Leica Geosystems Pegasus: Two mobile sensor platform, Garmin® LIDAR-Lite v3 measurement sensor, Quanergy M8 LiDAR sensors, Quanergy S3 solid state LiDAR sensor, LeddarTech® LeddarVU compact solid state fixed-beam LIDAR sensors, other industry-equivalent LIDAR sensors and/or systems, and may perform illuminated target and/or obstacle detection in an environment around the vehicle 100 using any known or future-developed standard and/or architecture.

The RADAR sensors 324 may include one or more radio components that are configured to detect objects/targets in an environment of the vehicle 100. In some embodiments, the RADAR sensors 324 may determine a distance, position, and/or movement vector (e.g., angle, speed, etc.) associated with a target over time. The RADAR sensors 324 may include a transmitter configured to generate and emit electromagnetic waves (e.g., radio, microwaves, etc.) and a receiver configured to detect returned electromagnetic waves. In some embodiments, the RADAR sensors 324 may include at least one processor configured to interpret the returned electromagnetic waves and determine locational properties of targets. Examples of the RADAR sensors 324 as described herein may include, but are not limited to, at least one of Infineon RASIC™ RTN7735PL transmitter and RRN7745PL/46PL receiver sensors, Autoliv ASP Vehicle RADAR sensors, Delphi L2C0051TR 77GHz ESR Electronically Scanning Radar sensors, Fujitsu Ten Ltd. Automotive Compact 77GHz 3D Electronic Scan Millimeter Wave Radar sensors, other industry-equivalent RADAR sensors and/or systems, and may perform radio target and/or obstacle detection in an environment around the vehicle 100 using any known or future-developed standard and/or architecture.

The ultrasonic sensors 328 may include one or more components that are configured to detect objects/targets in an environment of the vehicle 100. In some embodiments, the ultrasonic sensors 328 may determine a distance, position, and/or movement vector (e.g., angle, speed, etc.) associated with a target over time. The ultrasonic sensors 328 may include an ultrasonic transmitter and receiver, or transceiver, configured to generate and emit ultrasound waves and interpret returned echoes of those waves. In some embodiments, the ultrasonic sensors 328 may include at least one processor configured to interpret the returned ultrasonic waves and determine locational properties of targets. Examples of the ultrasonic sensors 328 as described herein may include, but are not limited to, at least one of Texas Instruments TIDA-00151 automotive ultrasonic sensor interface IC sensors, MaxBotix® MB8450 ultrasonic proximity sensor, MaxBotix® ParkSonar™-EZ ultrasonic proximity sensors, Murata Electronics MA40H1 S-R open-structure ultrasonic sensors, Murata Electronics MA40S4R/S open-structure ultrasonic sensors, Murata Electronics MA58MF14-7N waterproof ultrasonic sensors, other industry-equivalent ultrasonic sensors and/or systems, and may perform ultrasonic target and/or obstacle detection in an environment around the vehicle 100 using any known or future-developed standard and/or architecture.

The camera sensors 332 may include one or more components configured to detect image information associated with an environment of the vehicle 100. In some embodiments, the camera sensors 332 may include a lens, filter, image sensor, and/or a digital image processer. It is an aspect of the present disclosure that multiple camera sensors 332 may be used together to generate stereo images providing depth measurements. Examples of the camera sensors 332 as described herein may include, but are not limited to, at least one of ON Semiconductor® MT9V024 Global Shutter VGA GS CMOS image sensors, Teledyne DALSA Falcon2 camera sensors, CMOSIS CMV50000 high-speed CMOS image sensors, other industry-equivalent camera sensors and/or systems, where the camera sensors 332 may perform visual target and/or obstacle detection in an environment around the vehicle 100 using any known or future-developed standard and/or architecture. In at least one example embodiment, the camera sensors 332 may be synchronized with one or more existing light sources (e.g., headlights) to form a ToF sensor system.

The IR sensors 336 may include one or more components configured to detect image information associated with an environment of the vehicle 100. The IR sensors 336 may be configured to detect targets in low-light, dark, or poorly-lit environments. The IR sensors 336 may include an IR light emitting element (e.g., IR light emitting diode (LED), etc.) and an IR photodiode. In some embodiments, the IR photodiode may be configured to detect returned IR light at or about the same wavelength to that emitted by the IR light emitting element. In some embodiments, the IR sensors 336 may include at least one processor configured to interpret the returned IR light and determine locational properties of targets. The IR sensors 336 may be configured to detect and/or measure a temperature associated with a target (e.g., an object, pedestrian, other vehicle, etc.). Examples of IR sensors 336 as described herein may include, but are not limited to, at least one of Opto Diode lead-salt IR array sensors, Opto Diode OD-850 Near-IR LED sensors, Opto Diode SA/SHA727 steady state IR emitters and IR detectors, FLIR® LS microbolometer sensors, FLIR® TacFLIR 380-HD InSb MWIR FPA and HD MWIR thermal sensors, FLIR® VOx 640x480 pixel detector sensors, Delphi IR sensors, other industry-equivalent IR sensors and/or systems, and may perform IR visual target and/or obstacle detection in an environment around the vehicle 100 using any known or future-developed standard and/or architecture.

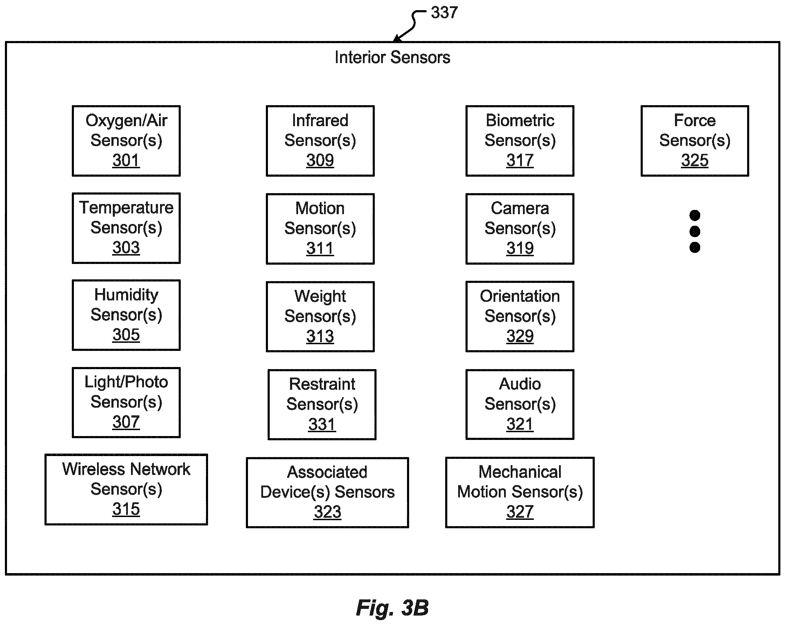

The vehicle 100 can also include one or more interior sensors 337. Interior sensors 337 can measure characteristics of the inside environment of the vehicle 100. The interior sensors 337 may be as described in conjunction with Fig. 3B.

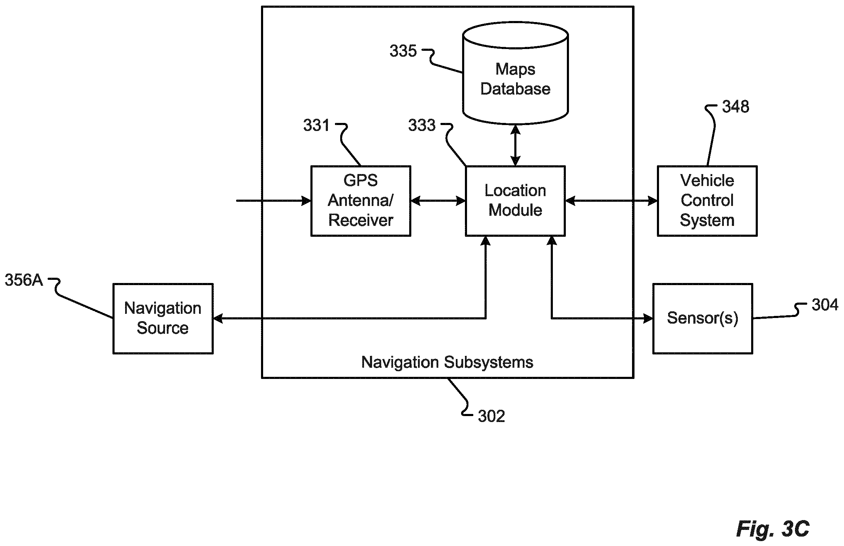

A navigation system 302 can include any hardware and/or software used to navigate the vehicle either manually or autonomously. The navigation system 302 may be as described in conjunction with Fig. 3C.

In some embodiments, the driving vehicle sensors and systems 304 may include other sensors 338 and/or combinations of the sensors 306-337 described above. Additionally or alternatively, one or more of the sensors 306-337 described above may include one or more processors configured to process and/or interpret signals detected by the one or more sensors 306-337. In some embodiments, the processing of at least some sensor information provided by the vehicle sensors and systems 304 may be processed by at least one sensor processor 340. Raw and/or processed sensor data may be stored in a sensor data memory 344 storage medium. In some embodiments, the sensor data memory 344 may store instructions used by the sensor processor 340 for processing sensor information provided by the sensors and systems 304. In any event, the sensor data memory 344 may be a disk drive, optical storage device, solid-state storage device such as a random access memory ("RAM") and/or a read-only memory ("ROM"), which can be programmable, flash-updateable, and/or the like.

The vehicle control system 348 may receive processed sensor information from the sensor processor 340 and determine to control an aspect of the vehicle 100. Controlling an aspect of the vehicle 100 may include presenting information via one or more display devices 372 associated with the vehicle, sending commands to one or more computing devices 368 associated with the vehicle, and/or controlling a driving operation of the vehicle. In some embodiments, the vehicle control system 348 may correspond to one or more computing systems that control driving operations of the vehicle 100 in accordance with the Levels of driving autonomy described above. In one embodiment, the vehicle control system 348 may operate a speed of the vehicle 100 by controlling an output signal to the accelerator and/or braking system of the vehicle. In this example, the vehicle control system 348 may receive sensor data describing an environment surrounding the vehicle 100 and, based on the sensor data received, determine to adjust the acceleration, power output, and/or braking of the vehicle 100. The vehicle control system 348 may additionally control steering and/or other driving functions of the vehicle 100.

The vehicle control system 348 may communicate, in real-time, with the driving sensors and systems 304 forming a feedback loop. In particular, upon receiving sensor information describing a condition of targets in the environment surrounding the vehicle 100, the vehicle control system 348 may autonomously make changes to a driving operation of the vehicle 100. The vehicle control system 348 may then receive subsequent sensor information describing any change to the condition of the targets detected in the environment as a result of the changes made to the driving operation. This continual cycle of observation (e.g., via the sensors, etc.) and action (e.g., selected control or non-control of vehicle operations, etc.) allows the vehicle 100 to operate autonomously in the environment.

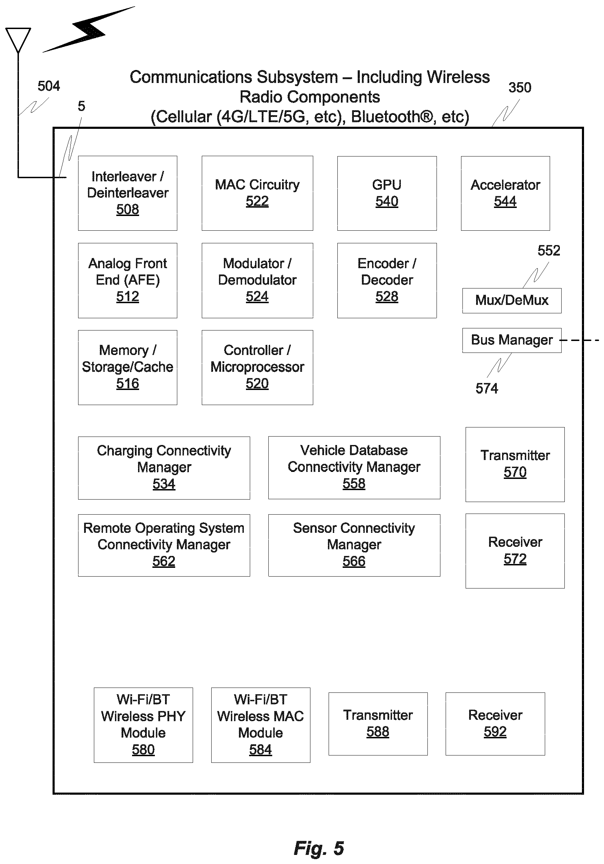

In some embodiments, the one or more components of the vehicle 100 (e.g., the driving vehicle sensors 304, vehicle control system 348, display devices 372, etc.) may communicate across the communication network 352 to one or more entities 356A-N via a communications subsystem 350 of the vehicle 100. Embodiments of the communications subsystem 350 are described in greater detail in conjunction with Fig. 5. For instance, the navigation sensors 308 may receive global positioning, location, and/or navigational information from a navigation source 356A. In some embodiments, the navigation source 356A may be a global navigation satellite system (GNSS) similar, if not identical, to NAVSTAR GPS, GLONASS, EU Galileo, and/or the BeiDou Navigation Satellite System (BDS) to name a few.

In some embodiments, the vehicle control system 348 may receive control information from one or more control sources 356B. The control source 356 may provide vehicle control information including autonomous driving control commands, vehicle operation override control commands, and the like. The control source 356 may correspond to an autonomous vehicle control system, a traffic control system, an administrative control entity, and/or some other controlling server. It is an aspect of the present disclosure that the vehicle control system 348 and/or other components of the vehicle 100 may exchange communications with the control source 356 across the communication network 352 and via the communications subsystem 350.

Information associated with controlling driving operations of the vehicle 100 may be stored in a control data memory 364 storage medium. The control data memory 364 may store instructions used by the vehicle control system 348 for controlling driving operations of the vehicle 100, historical control information, autonomous driving control rules, and the like. In some embodiments, the control data memory 364 may be a disk drive, optical storage device, solid-state storage device such as a random access memory ("RAM") and/or a read-only memory ("ROM"), which can be programmable, flash-updateable, and/or the like.

In addition to the mechanical components described herein, the vehicle 100 may include a number of user interface devices. The user interface devices receive and translate human input into a mechanical movement or electrical signal or stimulus. The human input may be one or more of motion (e.g., body movement, body part movement, in two-dimensional or three-dimensional space, etc.), voice, touch, and/or physical interaction with the components of the vehicle 100. In some embodiments, the human input may be configured to control one or more functions of the vehicle 100 and/or systems of the vehicle 100 described herein. User interfaces may include, but are in no way limited to, at least one graphical user interface of a display device, steering wheel or mechanism, transmission lever or button (e.g., including park, neutral, reverse, and/or drive positions, etc.), throttle control pedal or mechanism, brake control pedal or mechanism, power control switch, communications equipment, etc.

Fig. 3B shows a block diagram of an embodiment of interior sensors 337 for a vehicle 100. The interior sensors 337 may be arranged into one or more groups, based at least partially on the function of the interior sensors 337. For example, the interior space of a vehicle 100 may include environmental sensors, user interface sensor(s), and/or safety sensors. Additionally or alternatively, there may be sensors associated with various devices inside the vehicle (e.g., smart phones, tablets, mobile computers, wearables, etc.).

Environmental sensors may comprise sensors configured to collect data relating to the internal environment of a vehicle 100. Examples of environmental sensors may include one or more of, but are not limited to: oxygen/air sensors 301, temperature sensors 303, humidity sensors 305, light/photo sensors 307, and more. The oxygen/air sensors 301 may be configured to detect a quality or characteristic of the air in the interior space of the vehicle 100 (e.g., ratios and/or types of gasses comprising the air inside the vehicle 100, dangerous gas levels, safe gas levels, etc.). Temperature sensors 303 may be configured to detect temperature readings of one or more objects, users 216, and/or areas of a vehicle 100. Humidity sensors 305 may detect an amount of water vapor present in the air inside the vehicle 100. The light/photo sensors 307 can detect an amount of light present in the vehicle 100. Further, the light/photo sensors 307 may be configured to detect various levels of light intensity associated with light in the vehicle 100.

User interface sensors may comprise sensors configured to collect data relating to one or more users (e.g., a driver and/or passenger(s)) in a vehicle 100. As can be appreciated, the user interface sensors may include sensors that are configured to collect data from users 216 in one or more areas of the vehicle 100. Examples of user interface sensors may include one or more of, but are not limited to: IR sensors 309, motion sensors 311, weight sensors 313, wireless network sensors 315, biometric sensors 317, camera (or image) sensors 319, audio sensors 321, and more.

IR sensors 309 may be used to measure IR light irradiating from at least one surface, user, or other object in the vehicle 100. Among other things, the IR sensors 309 may be used to measure temperatures, form images (especially in low light conditions), identify users 216, and even detect motion in the vehicle 100.

The motion sensors 311 may detect motion and/or movement of objects inside the vehicle 100. Optionally, the motion sensors 311 may be used alone or in combination to detect movement. For example, a user may be operating a vehicle 100 (e.g., while driving, etc.) when a passenger in the rear of the vehicle 100 unbuckles a safety belt and proceeds to move about the vehicle 100. In this example, the movement of the passenger could be detected by the motion sensors 311. In response to detecting the movement and/or the direction associated with the movement, the passenger may be prevented from interfacing with and/or accessing at least some of the vehicle control features. As can be appreciated, the user may be alerted of the movement/motion such that the user can act to prevent the passenger from interfering with the vehicle controls. Optionally, the number of motion sensors in a vehicle may be increased to increase an accuracy associated with motion detected in the vehicle 100.

Weight sensors 313 may be employed to collect data relating to objects and/or users in various areas of the vehicle 100. In some cases, the weight sensors 313 may be included in the seats and/or floor of a vehicle 100. Optionally, the vehicle 100 may include a wireless network sensor 315. This sensor 315 may be configured to detect one or more wireless network(s) inside the vehicle 100. Examples of wireless networks may include, but are not limited to, wireless communications utilizing Bluetooth®, Wi-Fi™, ZigBee, IEEE 802.11, and other wireless technology standards. For example, a mobile hotspot may be detected inside the vehicle 100 via the wireless network sensor 315. In this case, the vehicle 100 may determine to utilize and/or share the mobile hotspot detected via/with one or more other devices associated with the vehicle 100.

Biometric sensors 317 may be employed to identify and/or record characteristics associated with a user. It is anticipated that biometric sensors 317 can include at least one of image sensors, IR sensors, fingerprint readers, weight sensors, load cells, force transducers, heart rate monitors, blood pressure monitors, and the like as provided herein.

The camera sensors 319 may record still images, video, and/or combinations thereof. Camera sensors 319 may be used alone or in combination to identify objects, users, and/or other features, inside the vehicle 100. Two or more camera sensors 319 may be used in combination to form, among other things, stereo and/or three-dimensional (3D) images. The stereo images can be recorded and/or used to determine depth associated with objects and/or users in a vehicle 100. Further, the camera sensors 319 used in combination may determine the complex geometry associated with identifying characteristics of a user. For example, the camera sensors 319 may be used to determine dimensions between various features of a user's face (e.g., the depth/distance from a user's nose to a user's cheeks, a linear distance between the center of a user's eyes, and more). These dimensions may be used to verify, record, and even modify characteristics that serve to identify a user. The camera sensors 319 may also be used to determine movement associated with objects and/or users within the vehicle 100. It should be appreciated that the number of image sensors used in a vehicle 100 may be increased to provide greater dimensional accuracy and/or views of a detected image in the vehicle 100. In at least one example embodiment, the camera sensors 319 may be synchronized with one or more existing light sources (e.g., interior lights) to form a ToF sensor system.

The audio sensors 321 may be configured to receive audio input from a user of the vehicle 100. The audio input from a user may correspond to voice commands, conversations detected in the vehicle 100, phone calls made in the vehicle 100, and/or other audible expressions made in the vehicle 100. Audio sensors 321 may include, but are not limited to, microphones and other types of acoustic-to-electric transducers or sensors. Optionally, the interior audio sensors 321 may be configured to receive and convert sound waves into an equivalent analog or digital signal. The interior audio sensors 321 may serve to determine one or more locations associated with various sounds in the vehicle 100. The location of the sounds may be determined based on a comparison of volume levels, intensity, and the like, between sounds detected by two or more interior audio sensors 321. For instance, a first audio sensors 321 may be located in a first area of the vehicle 100 and a second audio sensors 321 may be located in a second area of the vehicle 100. If a sound is detected at a first volume level by the first audio sensors 321 A and a second, higher, volume level by the second audio sensors 321 in the second area of the vehicle 100, the sound may be determined to be closer to the second area of the vehicle 100. As can be appreciated, the number of sound receivers used in a vehicle 100 may be increased (e.g., more than two, etc.) to increase measurement accuracy surrounding sound detection and location, or source, of the sound (e.g., via triangulation, etc.).

The safety sensors may comprise sensors configured to collect data relating to the safety of a user and/or one or more components of a vehicle 100. Examples of safety sensors may include one or more of, but are not limited to: force sensors 325, mechanical motion sensors 327, orientation sensors 329, restraint sensors 331, and more.

The force sensors 325 may include one or more sensors inside the vehicle 100 configured to detect a force observed in the vehicle 100. One example of a force sensor 325 may include a force transducer that converts measured forces (e.g., force, weight, pressure, etc.) into output signals. Mechanical motion sensors 327 may correspond to encoders, accelerometers, damped masses, and the like. Optionally, the mechanical motion sensors 327 may be adapted to measure the force of gravity (i.e., G-force) as observed inside the vehicle 100. Measuring the G-force observed inside a vehicle 100 can provide valuable information related to a vehicle's acceleration, deceleration, collisions, and/or forces that may have been suffered by one or more users in the vehicle 100. Orientation sensors 329 can include accelerometers, gyroscopes, magnetic sensors, and the like that are configured to detect an orientation associated with the vehicle 100.

The restraint sensors 331 may correspond to sensors associated with one or more restraint devices and/or systems in a vehicle 100. Seatbelts and airbags are examples of restraint devices and/or systems. As can be appreciated, the restraint devices and/or systems may be associated with one or more sensors that are configured to detect a state of the device/system. The state may include extension, engagement, retraction, disengagement, deployment, and/or other electrical or mechanical conditions associated with the device/system.

The associated device sensors 323 can include any sensors that are associated with a device in the vehicle 100. As previously stated, typical devices may include smart phones, tablets, laptops, mobile computers, and the like. It is anticipated that the various sensors associated with these devices can be employed by the vehicle control system 348. For example, a typical smart phone can include, an image sensor, an IR sensor, audio sensor, gyroscope, accelerometer, wireless network sensor, fingerprint reader, and more. It is an aspect of the present disclosure that one or more of these associated device sensors 323 may be used by one or more subsystems of the vehicle 100.

Fig. 3C illustrates a GPS/Navigation subsystem(s) 302. The navigation subsystem(s) 302 can be any present or future-built navigation system that may use location data, for example, from the Global Positioning System (GPS), to provide navigation information or control the vehicle 100. The navigation subsystem(s) 302 can include several components, such as, one or more of, but not limited to: a GPS Antenna/receiver 331, a location module 333, a maps database 335, etc. Generally, the several components or modules 331-335 may be hardware, software, firmware, computer readable media, or combinations thereof.

A GPS Antenna/receiver 331 can be any antenna, GPS puck, and/or receiver capable of receiving signals from a GPS satellite or other navigation system. The signals may be demodulated, converted, interpreted, etc. by the GPS Antenna/receiver 331 and provided to the location module 333. Thus, the GPS Antenna/receiver 331 may convert the time signals from the GPS system and provide a location (e.g., coordinates on a map) to the location module 333. Alternatively, the location module 333 can interpret the time signals into coordinates or other location information.

The location module 333 can be the controller of the satellite navigation system designed for use in the vehicle 100. The location module 333 can acquire position data, as from the GPS Antenna/receiver 331, to locate the user or vehicle 100 on a road in the unit's map database 335. Using the road database 335, the location module 333 can give directions to other locations along roads also in the database 335. When a GPS signal is not available, the location module 333 may apply dead reckoning to estimate distance data from sensors 304 including one or more of, but not limited to, a speed sensor attached to the drive train of the vehicle 100, a gyroscope, an accelerometer, etc. Additionally or alternatively, the location module 333 may use known locations of Wi-Fi hotspots, cell tower data, etc. to determine the position of the vehicle 100, such as by using time difference of arrival (TDOA) and/or frequency difference of arrival (FDOA) techniques.

The maps database 335 can include any hardware and/or software to store information about maps, geographical information system (GIS) information, location information, etc. The maps database 335 can include any data definition or other structure to store the information. Generally, the maps database 335 can include a road database that may include one or more vector maps of areas of interest. Street names, street numbers, house numbers, and other information can be encoded as geographic coordinates so that the user can find some desired destination by street address. Points of interest (waypoints) can also be stored with their geographic coordinates. For example, a point of interest may include speed cameras, fuel stations, public parking, and "parked here" (or "you parked here") information. The maps database 335 may also include road or street characteristics, for example, speed limits, location of stop lights/stop signs, lane divisions, school locations, etc. The map database contents can be produced or updated by a server connected through a wireless system in communication with the Internet, even as the vehicle 100 is driven along existing streets, yielding an up-to-date map.

The vehicle control system 348, when operating in L4 or L5 and based on sensor information from the external and interior vehicle sensors, can control the driving behavior of the vehicle in response to the current vehicle location, sensed object information, sensed vehicle occupant information, vehicle-related information, exterior environmental information, and navigation information from the maps database 335.

The sensed object information refers to sensed information regarding objects external to the vehicle. Examples include animate objects such as animals and attributes thereof (e.g., animal type, current spatial location, current activity, etc.), and pedestrians and attributes thereof (e.g., identity, age, sex, current spatial location, current activity, etc.), and the like and inanimate objects and attributes thereof such as other vehicles (e.g., current vehicle state or activity (parked or in motion or level of automation currently employed), occupant or operator identity, vehicle type (truck, car, etc.), vehicle spatial location, etc.), curbs (topography and spatial location), potholes (size and spatial location), lane division markers (type or color and spatial locations), signage (type or color and spatial locations such as speed limit signs, yield signs, stop signs, and other restrictive or warning signs), traffic signals (e.g., red, yellow, blue, green, etc.), buildings (spatial locations), walls (height and spatial locations), barricades (height and spatial location), and the like.

The sensed occupant information refers to sensed information regarding occupants internal to the vehicle. Examples include the number and identities of occupants and attributes thereof (e.g., seating position, age, sex, gaze direction, biometric information, authentication information, preferences, historic behavior patterns (such as current or historical user driving behavior, historical user route, destination, and waypoint preferences), nationality, ethnicity and race, language preferences (e.g., Spanish, English, Chinese, etc.), current occupant role (e.g., operator or passenger), occupant priority ranking (e.g., vehicle owner is given a higher ranking than a child occupant), electronic calendar information (e.g., Outlook™), and medical information and history, etc.

The vehicle-related information refers to sensed information regarding the selected vehicle. Examples include vehicle manufacturer, type, model, year of manufacture, current geographic location, current vehicle state or activity (parked or in motion or level of automation currently employed), vehicle specifications and capabilities, currently sensed operational parameters for the vehicle, and other information.

The exterior environmental information refers to sensed information regarding the external environment of the selected vehicle. Examples include road type (pavement, gravel, brick, etc.), road condition (e.g., wet, dry, icy, snowy, etc.), weather condition (e.g., outside temperature, pressure, humidity, wind speed and direction, etc.), ambient light conditions (e.g., time-of-day), degree of development of vehicle surroundings (e.g., urban or rural), and the like.

In a typical implementation, the automated vehicle control system 348, based on feedback from certain sensors, specifically the LIDAR and radar sensors positioned around the circumference of the vehicle, constructs a three-dimensional map in spatial proximity to the vehicle that enables the automated vehicle control system 348to identify and spatially locate animate and inanimate objects. Other sensors, such as inertial measurement units, gyroscopes, wheel encoders, sonar sensors, motion sensors to perform odometry calculations with respect to nearby moving exterior objects, and exterior facing cameras (e.g., to perform computer vision processing) can provide further contextual information for generation of a more accurate three-dimensional map. The navigation information is combined with the three-dimensional map to provide short, intermediate and long-range course tracking and route selection. The vehicle control system 348 processes real-world information as well as GPS data and driving speed to determine accurately the precise position of each vehicle, down to a few centimeters all while making corrections for nearby animate and inanimate objects.

The vehicle control system 348 can process in substantial real time the aggregate mapping information and models (or predicts) behavior of occupants of the current vehicle and other nearby animate or inanimate objects and, based on the aggregate mapping information and modeled behavior, issues appropriate commands regarding vehicle operation. While some commands are hard-coded into the vehicle, such as stopping at red lights and stop signs, other responses are learned and recorded by profile updates based on previous driving experiences. Examples of learned behavior include a slow-moving or stopped vehicle or emergency vehicle in a right lane suggests a higher probability that the car following it will attempt to pass, a pot hole, rock, or other foreign object in the roadway equates to a higher probability that a driver will swerve to avoid it, and traffic congestion in one lane means that other drivers moving in the same direction will have a higher probability of passing in an adjacent lane or by driving on the shoulder.

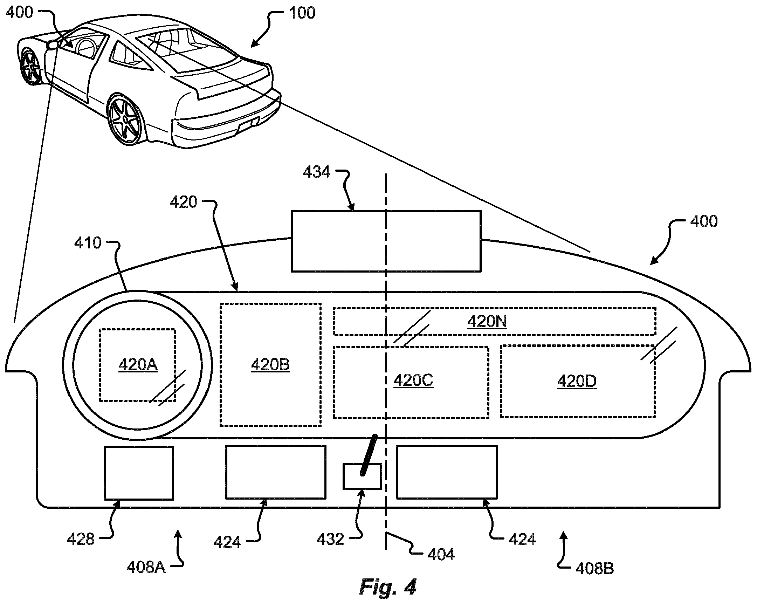

Fig. 4 shows one embodiment of the instrument panel 400 of the vehicle 100. The instrument panel 400 of vehicle 100 comprises a steering wheel 410, a vehicle operational display 420 (e.g., configured to present and/or display driving data such as speed, measured air resistance, vehicle information, entertainment information, etc.), one or more auxiliary displays 424 (e.g., configured to present and/or display information segregated from the operational display 420, entertainment applications, movies, music, etc.), a heads-up display 434 (e.g., configured to display any information previously described including, but in no way limited to, guidance information such as route to destination, or obstacle warning information to warn of a potential collision, or some or all primary vehicle operational data such as speed, resistance, etc.), a power management display 428 (e.g., configured to display data corresponding to electric power levels of vehicle 100, reserve power, charging status, etc.), and an input device 432 (e.g., a controller, touchscreen, or other interface device configured to interface with one or more displays in the instrument panel or components of the vehicle 100. The input device 432 may be configured as a joystick, mouse, touchpad, tablet, 3D gesture capture device, etc.). In some embodiments, the input device 432 may be used to manually maneuver a portion of the vehicle 100 into a charging position (e.g., moving a charging plate to a desired separation distance, etc.).

While one or more of displays of instrument panel 400 may be touch-screen displays, it should be appreciated that the vehicle operational display may be a display incapable of receiving touch input. For instance, the operational display 420 that spans across an interior space centerline 404 and across both a first zone 408A and a second zone 408B may be isolated from receiving input from touch, especially from a passenger. In some cases, a display that provides vehicle operation or critical systems information and interface may be restricted from receiving touch input and/or be configured as a non-touch display. This type of configuration can prevent dangerous mistakes in providing touch input where such input may cause an accident or unwanted control.

In some embodiments, one or more displays of the instrument panel 400 may be mobile devices and/or applications residing on a mobile device such as a smart phone. Additionally or alternatively, any of the information described herein may be presented to one or more portions 420A-N of the operational display 420 or other display 424, 428, 434. In one embodiment, one or more displays of the instrument panel 400 may be physically separated or detached from the instrument panel 400. In some cases, a detachable display may remain tethered to the instrument panel.

The portions 420A-N of the operational display 420 may be dynamically reconfigured and/or resized to suit any display of information as described. Additionally or alternatively, the number of portions 420A-N used to visually present information via the operational display 420 may be dynamically increased or decreased as required, and are not limited to the configurations shown.

Fig. 5 illustrates a hardware diagram of communications componentry that can be optionally associated with the vehicle 100 in accordance with embodiments of the present disclosure.

The communications componentry can include one or more wired or wireless devices such as a transceiver(s) and/or modem that allows communications not only between the various systems disclosed herein but also with other devices, such as devices on a network, and/or on a distributed network such as the Internet and/or in the cloud and/or with other vehicle(s).

The communications subsystem 350 can also include inter- and intra-vehicle communications capabilities such as hotspot and/or access point connectivity for any one or more of the vehicle occupants and/or vehicle-to-vehicle communications.

Additionally, and while not specifically illustrated, the communications subsystem 350 can include one or more communications links (that can be wired or wireless) and/or communications busses (managed by the bus manager 574), including one or more of CAN bus, OBD-II, ARCINC 429, Byteflight, CAN (Controller Area Network), D2B (Domestic Digital Bus), FlexRay, DC-BUS, IDB-1394, IEBus, I2C, ISO 9141-1/-2, J1708, J1587, J1850, J1939, ISO 11783, Keyword Protocol 2000, LIN (Local Interconnect Network), MOST (Media Oriented Systems Transport), Multifunction Vehicle Bus, SMARTwireX, SPI, VAN (Vehicle Area Network), and the like or in general any communications protocol and/or standard(s).

The various protocols and communications can be communicated one or more of wirelessly and/or over transmission media such as single wire, twisted pair, fiber optic, IEEE 1394, MIL-STD-1553, MIL-STD-1773, power-line communication, or the like. (All of the above standards and protocols are incorporated herein by reference in their entirety).

As discussed, the communications subsystem 350 enables communications between any of the inter-vehicle systems and subsystems as well as communications with non-collocated resources, such as those reachable over a network such as the Internet.

The communications subsystem 350, in addition to well-known componentry (which has been omitted for clarity), includes interconnected elements including one or more of: one or more antennas 504, an interleaver/deinterleaver 508, an analog front end (AFE) 512, memory/storage/cache 516, controller/microprocessor 520, MAC circuitry 522, modulator/demodulator 524, encoder/decoder 528, a plurality of connectivity managers 534, 558, 562, 566, GPU 540, accelerator 544, a multiplexer/demultiplexer 552, transmitter 570, receiver 572 and additional wireless radio components such as a Wi-Fi PHY/Bluetooth® module 580, a Wi-Fi/BT MAC module 584, additional transmitter(s) 588 and additional receiver(s) 592. The various elements in the device 350 are connected by one or more links/busses 5 (not shown, again for sake of clarity).

The device 350 can have one more antennas 504, for use in wireless communications such as multi-input multi-output (MIMO) communications, multiuser multi-input multi-output (NW-MIMO) communications Bluetooth®, LTE, 4G, 5G, Near-Field Communication (NFC), etc., and in general for any type of wireless communications. The antenna(s) 504 can include, but are not limited to one or more of directional antennas, omnidirectional antennas, monopoles, patch antennas, loop antennas, microstrip antennas, dipoles, and any other antenna(s) suitable for communication transmission/reception. In an exemplary embodiment, transmission/reception using MIMO may require particular antenna spacing. In another exemplary embodiment, MIMO transmission/reception can enable spatial diversity allowing for different channel characteristics at each of the antennas. In yet another embodiment, MIMO transmission/reception can be used to distribute resources to multiple users for example within the vehicle 100 and/or in another vehicle.

Antenna(s) 504 generally interact with the Analog Front End (AFE) 512, which is needed to enable the correct processing of the received modulated signal and signal conditioning for a transmitted signal. The AFE 512 can be functionally located between the antenna and a digital baseband system in order to convert the analog signal into a digital signal for processing and vice-versa.

The subsystem 350 can also include a controller/microprocessor 520 and a memory/storage/cache 516. The subsystem 350 can interact with the memory/storage/cache 516 which may store information and operations necessary for configuring and transmitting or receiving the information described herein. The memory/storage/cache 516 may also be used in connection with the execution of application programming or instructions by the controller/microprocessor 520, and for temporary or long-term storage of program instructions and/or data. As examples, the memory/storage/cache 520 may comprise a computer-readable device, RAM, ROM, DRAM, SDRAM, and/or other storage device(s) and media.

The controller/microprocessor 520 may comprise a general-purpose programmable processor or controller for executing application programming or instructions related to the subsystem 350. Furthermore, the controller/microprocessor 520 can perform operations for configuring and transmitting/receiving information as described herein. The controller/microprocessor 520 may include multiple processor cores, and/or implement multiple virtual processors. Optionally, the controller/microprocessor 520 may include multiple physical processors. By way of example, the controller/microprocessor 520 may comprise a specially configured Application Specific Integrated Circuit (ASIC) or other integrated circuit, a digital signal processor(s), a controller, a hardwired electronic or logic circuit, a programmable logic device or gate array, a special purpose computer, or the like.

The subsystem 350 can further include a transmitter(s) 570, 588 and receiver(s) 572, 592 which can transmit and receive signals, respectively, to and from other devices, subsystems and/or other destinations using the one or more antennas 504 and/or links/busses. Included in the subsystem 350 circuitry is the medium access control or MAC Circuitry 522. MAC circuitry 522 provides for controlling access to the wireless medium. In an exemplary embodiment, the MAC circuitry 522 may be arranged to contend for the wireless medium and configure frames or packets for communicating over the wired/wireless medium.

The subsystem 350 can also optionally contain a security module (not shown). This security module can contain information regarding but not limited to, security parameters required to connect the device to one or more other devices or other available network(s), and can include WEP or WPA/WPA-2 (optionally + AES and/or TKIP) security access keys, network keys, etc. The WEP security access key is a security password used by Wi-Fi networks. Knowledge of this code can enable a wireless device to exchange information with an access point and/or another device. The information exchange can occur through encoded messages with the WEP access code often being chosen by the network administrator. WPA is an added security standard that is also used in conjunction with network connectivity with stronger encryption than WEP.

In some embodiments, the communications subsystem 350 also includes a GPU 540, an accelerator 544, a Wi-Fi/BT/BLE (Bluetooth® Low-Energy) PHY module 580 and a Wi-FiIBTIBLE MAC module 584 and optional wireless transmitter 588 and optional wireless receiver 592. In some embodiments, the GPU 540 may be a graphics processing unit, or visual processing unit, comprising at least one circuit and/or chip that manipulates and changes memory to accelerate the creation of images in a frame buffer for output to at least one display device. The GPU 540 may include one or more of a display device connection port, printed circuit board (PCB), a GPU chip, a metal-oxide-semiconductor field-effect transistor (MOSFET), memory (e.g., single data rate random-access memory (SDRAM), double data rate random-access memory (DDR) RAM, etc., and/or combinations thereof), a secondary processing chip (e.g., handling video out capabilities, processing, and/or other functions in addition to the GPU chip, etc.), a capacitor, heatsink, temperature control or cooling fan, motherboard connection, shielding, and the like.

The various connectivity managers 534, 558, 562, 566 manage and/or coordinate communications between the subsystem 350 and one or more of the systems disclosed herein and one or more other devices/systems. The connectivity managers 534, 558, 562, 566 include a charging connectivity manager 534, a vehicle database connectivity manager 558, a remote operating system connectivity manager 562, and a sensor connectivity manager 566.

The charging connectivity manager 534 can coordinate not only the physical connectivity between the vehicle 100 and a charging device/vehicle but can also communicate with one or more of a power management controller, one or more third parties and optionally a billing system(s). As an example, the vehicle 100 can establish communications with the charging device/vehicle to one or more of coordinate interconnectivity between the two (e.g., by spatially aligning the charging receptacle on the vehicle with the charger on the charging vehicle) and optionally share navigation information. Once charging is complete, the amount of charge provided can be tracked and optionally forwarded to, for example, a third party for billing. In addition to being able to manage connectivity for the exchange of power, the charging connectivity manager 534 can also communicate information, such as billing information to the charging vehicle and/or a third party. This billing information could be, for example, the owner of the vehicle, the driver/occupant(s) of the vehicle, company information, or in general any information usable to charge the appropriate entity for the power received.

The vehicle database connectivity manager 558 allows the subsystem to receive and/or share information stored in the vehicle database. This information can be shared with other vehicle components/subsystems and/or other entities, such as third parties and/or charging systems. The information can also be shared with one or more vehicle occupant devices, such as an app (application) on a mobile device the driver uses to track information about the vehicle 100 and/or a dealer or service/maintenance provider. In general, any information stored in the vehicle database can optionally be shared with any one or more other devices optionally subject to any privacy or confidentially restrictions.

The remote operating system connectivity manager 562 facilitates communications between the vehicle 100 and any one or more autonomous vehicle systems. These communications can include one or more of navigation information, vehicle information, other vehicle information, weather information, occupant information, or in general any information related to the remote operation of the vehicle 100.

The sensor connectivity manager 566 facilitates communications between any one or more of the vehicle sensors (e.g., the driving vehicle sensors and systems 304, etc.) and any one or more of the other vehicle systems. The sensor connectivity manager 566 can also facilitate communications between any one or more of the sensors and/or vehicle systems and any other destination, such as a service company, app, or in general to any destination where sensor data is needed.

In accordance with one exemplary embodiment, any of the communications discussed herein can be communicated via the conductor(s) used for charging. One exemplary protocol usable for these communications is Power-line communication (PLC). PLC is a communication protocol that uses electrical wiring to simultaneously carry both data, and Alternating Current (AC) electric power transmission or electric power distribution. It is also known as power-line carrier, power-line digital subscriber line (PDSL), mains communication, power-line telecommunications, or power-line networking (PLN). For DC environments in vehicles PLC can be used in conjunction with CAN bus, LIN-bus over power line (DC-LIN) and DC-BUS.

The communications subsystem can also optionally manage one or more identifiers, such as an IP (Internet Protocol) address(es), associated with the vehicle and one or other system or subsystems or components and/or devices therein. These identifiers can be used in conjunction with any one or more of the connectivity managers as discussed herein.

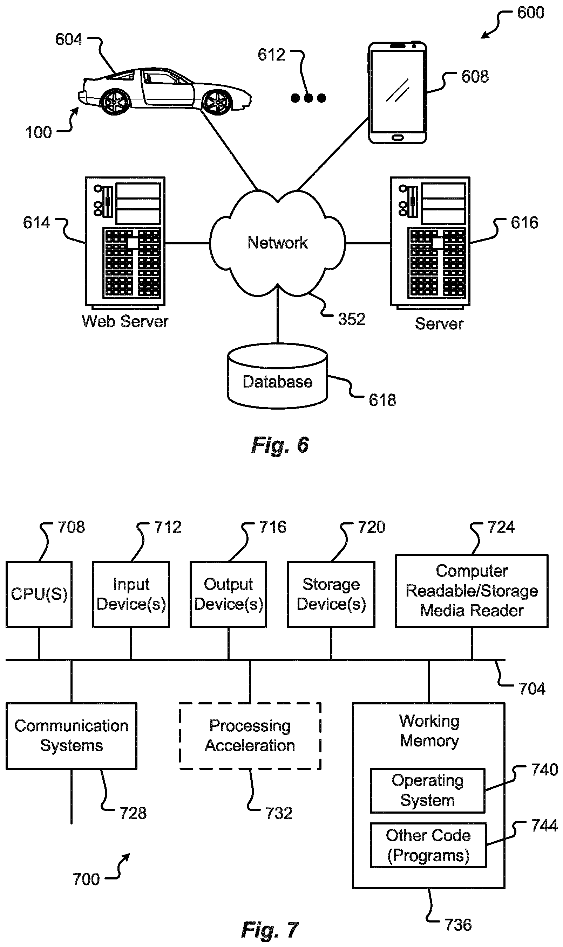

Fig. 6 illustrates a block diagram of a computing environment 600 that may function as the servers, user computers, or other systems provided and described herein. The computing environment 600 includes one or more user computers, or computing devices, such as a vehicle computing device 604, a communication device 608, and/or more 612. The computing devices 604, 608, 612 may include general purpose personal computers (including, merely by way of example, personal computers, and/or laptop computers running various versions of Microsoft Corp.'s Windows® and/or Apple Corp.'s Macintosh® operating systems) and/or workstation computers running any of a variety of commercially-available UNIX® or UNIX-like operating systems. These computing devices 604, 608, 612 may also have any of a variety of applications, including for example, database client and/or server applications, and web browser applications. Alternatively, the computing devices 604, 608, 612 may be any other electronic device, such as a thin-client computer, Internet-enabled mobile telephone, and/or personal digital assistant, capable of communicating via a network 352 and/or displaying and navigating web pages or other types of electronic documents or information. Although the exemplary computing environment 600 is shown with two computing devices, any number of user computers or computing devices may be supported.

The computing environment 600 may also include one or more servers 614, 616. In this example, server 614 is shown as a web server and server 616 is shown as an application server. The web server 614, which may be used to process requests for web pages or other electronic documents from computing devices 604, 608, 612. The web server 614 can be running an operating system including any of those discussed above, as well as any commercially-available server operating systems. The web server 614 can also run a variety of server applications, including SIP (Session Initiation Protocol) servers, HTTP(s) servers, FTP servers, CGI servers, database servers, Java® servers, and the like. In some instances, the web server 614 may publish operations available operations as one or more web services.

The computing environment 600 may also include one or more file and or/application servers 616, which can, in addition to an operating system, include one or more applications accessible by a client running on one or more of the computing devices 604, 608, 612. The server(s) 616 and/or 614 may be one or more general purpose computers capable of executing programs or scripts in response to the computing devices 604, 608, 612. As one example, the server 616, 614 may execute one or more web applications. The web application may be implemented as one or more scripts or programs written in any programming language, such as Java®, C, C#®, or C++, and/or any scripting language, such as Perl, Python, or TCL, as well as combinations of any programming/scripting languages. The application server(s) 616 may also include database servers, including without limitation those commercially available from Oracle®, Microsoft®, Sybase®, IBM® and the like, which can process requests from database clients running on a computing device 604, 608, 612.

The web pages created by the server 614 and/or 616 may be forwarded to a computing device 604, 608, 612 via a web (file) server 614, 616. Similarly, the web server 614 may be able to receive web page requests, web services invocations, and/or input data from a computing device 604, 608, 612 (e.g., a user computer, etc.) and can forward the web page requests and/or input data to the web (application) server 616. In further embodiments, the server 616 may function as a file server. Although for ease of description, Fig. 6 illustrates a separate web server 614 and file/application server 616, those skilled in the art will recognize that the functions described with respect to servers 614, 616 may be performed by a single server and/or a plurality of specialized servers, depending on implementation-specific needs and parameters. The computer systems 604, 608, 612, web (file) server 614 and/or web (application) server 616 may function as the system, devices, or components described in Figs. 1-6.

The computing environment 600 may also include a database 618. The database 618 may reside in a variety of locations. By way of example, database 618 may reside on a storage medium local to (and/or resident in) one or more of the computers 604, 608, 612, 614, 616. Alternatively, it may be remote from any or all of the computers 604, 608, 612, 614, 616, and in communication (e.g., via the network 352) with one or more of these. The database 618 may reside in a storage-area network ("SAN") familiar to those skilled in the art. Similarly, any necessary files for performing the functions attributed to the computers 604, 608, 612, 614, 616 may be stored locally on the respective computer and/or remotely, as appropriate. The database 618 may be a relational database, such as Oracle 20i®, that is adapted to store, update, and retrieve data in response to SQL-formatted commands.

Fig. 7 illustrates one embodiment of a computer system 700 upon which the servers, user computers, computing devices, or other systems or components described above may be deployed or executed. The computer system 700 is shown comprising hardware elements that may be electrically coupled via a bus 704. The hardware elements may include one or more central processing units (CPUs) 708; one or more input devices 712 (e.g., a mouse, a keyboard, etc.); and one or more output devices 716 (e.g., a display device, a printer, etc.). The computer system 700 may also include one or more storage devices 720. By way of example, storage device(s) 720 may be disk drives, optical storage devices, solid-state storage devices such as a random-access memory ("RAM") and/or a read-only memory ("ROM"), which can be programmable, flash-updateable and/or the like.

The computer system 700 may additionally include a computer-readable storage media reader 724; a communications system 728 (e.g., a modem, a network card (wireless or wired), an infra-red communication device, etc.); and working memory 736, which may include RAM and ROM devices as described above. The computer system 700 may also include a processing acceleration unit 732, which can include a DSP, a special-purpose processor, and/or the like.

The computer-readable storage media reader 724 can further be connected to a computer-readable storage medium, together (and, optionally, in combination with storage device(s) 720) comprehensively representing remote, local, fixed, and/or removable storage devices plus storage media for temporarily and/or more permanently containing computer-readable information. The communications system 728 may permit data to be exchanged with a network and/or any other computer described above with respect to the computer environments described herein. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine-readable mediums for storing information.

The computer system 700 may also comprise software elements, shown as being currently located within a working memory 736, including an operating system 740 and/or other code 744. It should be appreciated that alternate embodiments of a computer system 700 may have numerous variations from that described above. For example, customized hardware might also be used and/or particular elements might be implemented in hardware, software (including portable software, such as applets), or both. Further, connection to other computing devices such as network input/output devices may be employed.

Examples of the processors 340, 708 as described herein may include, but are not limited to, at least one of Qualcomm® Snapdragon® 800 and 801, Qualcomm® Snapdragon® 620 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

Fig. 8 illustrates one embodiment of a block diagram 800 for performing ToF determinations using passive sensors and existing light sources on a vehicle 100 in accordance with aspects of the present disclosure. The block diagram 800 may implement aspects of or may be implemented by aspects of the vehicle 100 as described with reference to Figs. 1-7. For example, the block diagram 800 may include a controller 804 (e.g., the vehicle control system 348 described with reference to Figs. 3A and 3C), one or more light sources 808, and one or more cameras 812 (e.g., sensors 116 as described with reference to Figs. 1 and 2 and the various sensors described with reference to FIG. 3B, such as the light/photo sensors 307, IR sensors 309, camera sensors 319, etc.). As shown, the one or more light sources 808 include a first light source 808A, a second light source 808B, etc., up to an N-th light source 808N; and the one or more cameras 812 include a first camera 812A, a second camera 812B, etc., up to an N-th camera 812N.

As described herein, the controller 804 may control the one or more light sources 808 to emit output light 816 of known characteristics and may control the one or more cameras 812 to monitor for and receive any reflected light 824 corresponding to the output light 816 that has reflected off an object 820 in the surrounding environment around the vehicle 100. By controlling the one or more light sources 808 and one or more cameras 812 as described herein, the controller 804 may generate depth data for a scene surrounding the vehicle 100 using light emitted from the one or more light sources 808 (e.g., output light 816) and reflected from the scene back to the one or more cameras 812. The depth data may correspond to depth values of one or more pixels of a camera 812, where the depth values are assigned to each pixel based on the time taken for emitted light to be reflected back from an object to pixels of a camera 812. The depth values may then be used to generate a depth image of the scene, for example, by assigning a grayscale value to each depth value and generating an image with the assigned grayscale values.

In operation, the controller 804 may control the one or more cameras 812 to initiate a timer or may start an internal timer of the controller 804 itself in response to the one or more light sources 808 emitting the output light 816. The timer/internal timer is stopped when the one or more cameras 812 detect the reflected light 824. The amount of time taken for the output light 816 emitted from the one or more light sources 808 to be received at the one or more cameras 812 via the reflected light 824 can then be used in ToF calculations (e.g., using Equations 1 and 2 as described previously) to determine the location of the object 820 relative to the vehicle 100. Based on determining the location of the object 820, the vehicle can enhance autonomous driving operations (e.g., to avoid colliding with the object 820) and/or semi-autonomous driving operations or manual driving operations (e.g., by alerting a driver or operator of the vehicle 100 of the proximity of the object 820 to the vehicle 100). Additionally or alternatively, the controller 804 may control one or more internal cameras and one or more internal sensors inside the vehicle 100 in a same or similar manner to perform ToF determinations for identifying objects within the vehicle 100.

In some examples, the controller 804 may be configured to operate in two modes, a first mode (e.g., for normal or manufacturer-intended operations of the one or more light sources 808 and the one or more cameras 812) and a second mode (e.g., for performing ToF determinations using the one or more light sources 808 and the one or more cameras 812). For example, the first mode includes the one or more light sources 808 providing a first function for the vehicle 100 and the one or more cameras 812 providing a second function for the vehicle 100. The first function may include the controller 804 controlling the one or more light sources 808 to illuminate the scene surrounding the vehicle 100 using visible wavelengths of light emitted from the one or more light sources 808, and the second function may include the controller 804 controlling the one or more cameras 812 to capture image data for the scene, where the image data is used to generate an image of the scene (e.g., color image, black and white image, etc.). The first and second functions may be carried out independently of one another in that the controller 804 does not synchronize the one or more light sources 808 with the one or more cameras 812 to provide ToF functionality. In this way, the controller 804 operates light sources 808 and cameras 812 independently of one another in the first mode.

Additionally or alternatively, the controller 804 may control the one or more light sources 808 and the one or more cameras 812 to operate together in the second mode to provide a third function. The third function may include generating the depth data based on ToF calculations and determinations as described herein. In some examples, the controller 804 may operate in both the first mode and the second mode simultaneously. For example, the controller 804 may continuously operate in the first mode to control the one or more light sources 808 and the one or more cameras 812 to provide the first function and the second function, respectively. Accordingly, the controller 804 may also continuously operate in the second mode to control the one or more light sources 808 and the one or more cameras 812 to provide the third function or may operate in the second mode on an as-desired or an as-needed basis (e.g., the second mode and third function are activated in response to a trigger, such as, human input to a vehicle interface, detection of certain ambient light conditions, detection of certain vehicle surroundings (e.g., detection of a high or low traffic area), and/or the like).

In some examples, the controller 804 can toggle or switch between the first mode and the second mode for the one or more light sources 808 and the one or more cameras 812 to provide the respective first and second functions or to provide the third function. For example, the vehicle 100 can toggle between the first mode and the second mode based on a trigger, such as whether the vehicle 100 is operating in a low power mode for gathering depth data, an input from a driver of the vehicle 100 that instructs the one or more light sources 808 and the camera(s) 812 to gather depth data, information from sensors and systems of the vehicle 100, or based on a different trigger not expressly indicated herein. In some examples, the low power mode can be selected or input by a driver of the vehicle 100 or can be activated by sensors or a controller of the vehicle 100 (e.g., if a battery power of the vehicle 100 drops below a threshold value). Additionally or alternatively, the controller 804 may activate or operate according to the second mode based on different factors of the environment surrounding the vehicle 100 (e.g., whether it is raining or not, if it is day or night, amount of traffic around the vehicle 100, etc.). The controller 804 can also activate or operate according to the second mode for different light sources 808 and cameras 812 based on different operations being performed with the vehicle 100 (e.g., light sources 808 and cameras 812 on the rear of the car may be directed to perform the third function if the vehicle 100 is reversing, additional light sources 808 and cameras 812 may be directed to perform the third function if autonomous driving for the vehicle 100 is enabled or being used, etc.).

In some examples, each of the one or more light sources 808 can include multiple light sources (e.g., multiple LEDs within a single light source 808), where the vehicle 100 can vary the number of LEDs pulsed for a light source 808. For example, the vehicle 100 may start with pulsing a small cluster of LEDs within the one or more light sources 808 and can add more LEDs until one or more conditions are satisfied for performing ToF calculations. Such conditions for performing ToF calculations may include satisfying a range for object detection, type of object being detected, reflectivity of the object being detected, and/or the like. Additionally or alternatively, the conditions for the controller 804 and the vehicle 100 to adjust the number of LEDs being pulsed may include information about the environment surrounding the vehicle 100 received via additional sensors of the vehicle 100. For example, the number of LEDs being pulsed can be adjusted by the controller 804 and the vehicle 100 for certain weather conditions (e.g., a greater number of LEDs can be pulsed for inclement weather, such as rain, fog, snow, etc.), amount of ambient lighting (e.g., a greater number of LEDs can be pulsed for a less amount of ambient lighting), or additional factors. In some examples, the controller 804 can control a light source 808 to emit light with different properties (e.g., different intensities of light by controlling the multiple light sources within the light source 808) to generate the depth data based on the reflected light 824 having the different properties.

The intensity of pulses being emitted by the light source 808 can be increased or decreased depending on a level of "noise" being generated in a sensor output. This adjustment of the intensity and/or frequency of the pulses may be used for scenarios where there are multiple objects of varying reflectivity in a same scene. That is, the light source 808 can be pulsed at varying intensity (e.g., stronger/weaker light) and/or frequency, thereby enabling a camera 812 to capture images from objects of both low and high reflectivity. The low reflectivity and the high reflectivity images can be superimposed according to a suitable image processing technique to form an HDR depth image (e.g., a high dynamic range depth image of the scene). In some examples, the vehicle 100 may use a single camera 812 for generating an HDR image while using different ones the light sources 808 to provide differently pulsed light to generate the depth data.

Additionally, the controller 804 may construct a ToF sensor system for generating the depth data by associating a single light source 808 with multiple cameras 812. For example, the controller 804 may control the single light source 808 and the multiple cameras 812 to expand a field of view of an image captured by the depth data (e.g., a depth image of the scene surrounding the vehicle 100). Accordingly, multiple cameras 812 (e.g., passive sensors) can be synchronized with a same light source 808 to expand the effective field of view of the system, such that the vehicle 100 can have multiple cameras 812 sensing reflected light that originated from one light source 808 to expand the field of view that can be captured from a single light source 808.

In some examples, the vehicle 100 may employ a variable camera field of view for the one or more cameras 812. That is, the controller 804 of the vehicle 100 can control a radiation pattern of the one or more light sources 808 to vary based on a speed of the vehicle. For example, depending on the speed of the vehicle 100, the controller 804 can actuate the one or more light sources 808 (e.g., headlights) such that a conical angle of output light 816 emitted from the one or more light sources 808 is wider at lower speeds or as the speed of the vehicle 100 decreases and narrower at higher speeds or as the speed of the vehicle 100 increases. This actuation or adjustment of the one or more light sources 808 may enable the controller 804 to collect depth and angular position information at a higher or lower resolution based on the driving speed of the vehicle 100. Additionally or alternatively, the vehicle 100 may use small and large field of view cameras for detecting different parts of scenes of the surrounding environment around the vehicle 100.

Additionally, the process described herein performed by the controller 804, the one or more light sources 808, and the one or more cameras 812 can be used for both direct ToF calculations according to Equations 1 and 2 and/or indirect ToF calculations (that involve using different phases for emitted light from the one or more light sources 808 to calculate distance to nearby objects). In some examples, the controller 804 may be configured to perform either the direct ToF calculations or the indirect ToF calculations. Additionally or alternatively, the controller 804 may switch between direct ToF calculations and the indirect ToF calculations based on different characteristics of the vehicle 100 and/or the scene surrounding the vehicle 100. To enable the indirect ToF calculations, the controller 804 may control the one or more light sources 808 to emit the output light 816 at different phases for different pulses.

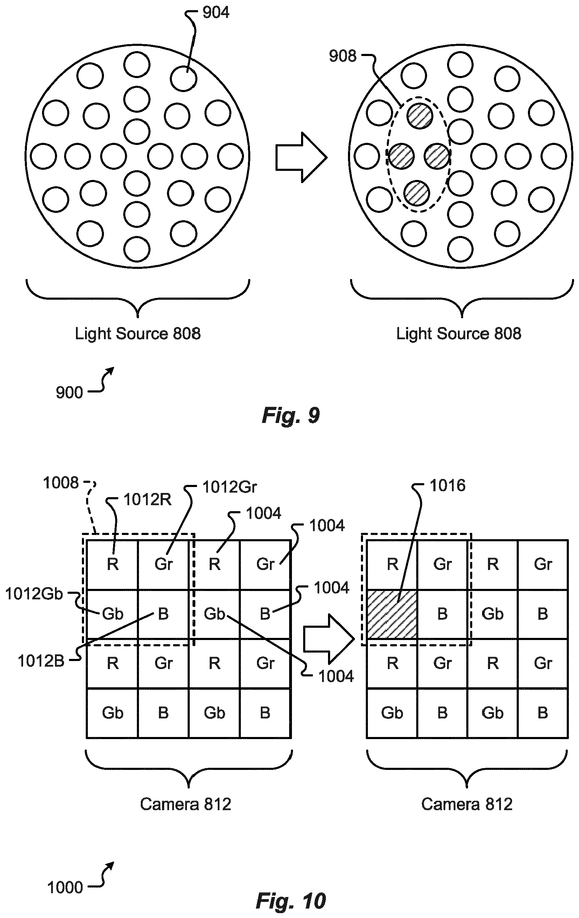

Fig. 9 illustrates one embodiment of a light source operation 900 for performing ToF determinations in accordance with aspects of the present disclosure. The light source operation 900 may implement aspects of or may be implemented by aspects of the vehicle 100 as described with reference to Figs. 1-8. For example, the light source operation 900 may include a light source 808 as described with reference to Fig. 8. In some examples, the light source 808 includes multiple individual lights 904 that work in unison to provide an emitted light from the light source 808. As an example, the multiple individual lights 904 may be LEDs. Additionally or alternatively, the multiple individual lights 904 may be halogen lights. In both examples, the individual light source 808 may include multiple light sources (e.g., with the multiple individual lights 904).

In some examples, a controller of a vehicle 100 (e.g., the controller 804 as described with reference to Fig. 8) can individually control each of the individual lights 904 of the light source 808. As described with reference to Fig. 8, the controller may control the light source 808 to operate according to first and/or second modes. As noted above, the first mode may be referred to as a normal operation mode where the light source 808 provides a first function, such as providing illumination for a scene surrounding the vehicle 100 (e.g., using visible light or visible wavelengths of light emitted from the light source 808). Accordingly, the controller may control each of the individual lights 904 to provide this first function (e.g., illumination of the scene) as part of the first mode.

Additionally or alternatively, the controller of the vehicle may control the light source 808 to operate according to the second mode. As described previously, the second mode may include the controller controlling the light source 808 to emit a light that can be used for performing ToF determinations and gathering depth data for the scene surrounding the vehicle 100 (e.g., to determine distances from the vehicle 100 to any nearby objects). In some examples, the controller can operate according to the first mode and the second mode simultaneously. As part of the second mode, the controller can control a subset 908 of the individual lights 904 to perform a third function to emit a light with certain characteristics (e.g., different type of light than emitted as part of the first mode, such as IR light or other types of non-visible lights) that enable a separate camera or sensor to monitor for and receive the light emitted from the subset 908 to generate a depth image of the scene surrounding the vehicle 100. The techniques performed by the camera or sensor to monitor for and receive the light emitted from the subset 908 is described in greater detail with reference to Fig. 10.

In some examples, the controller may vary the number of individual lights 904 of the subset 908 that are pulsed for the light source 808 as part of the ToF determination and depth data generation described herein. For example, the vehicle 100 may start with pulsing a small cluster of the individual lights 904 for the subset 908 and can add more individual lights 908 until a range is satisfied for performing the ToF determination. Additionally or alternatively, the controller 804 may control all of the individual lights 904 of the light source 808 to emit the light for the second mode, where the light source 808 alternates between each operating mode. In some examples, the individual lights 904 in each light source 808 (e.g., as well as different light sources 808) can be made to operate independently of one another and can therefore be used to illuminate different areas around the vehicle 100 independently for multiple passive sensors (e.g., cameras) placed on different locations around the vehicle 100.

Fig. 10 illustrates one embodiment of a sensor operation 1000 for performing ToF determinations in accordance with aspects of the present disclosure. The sensor operation 1000 may implement aspects of or may be implemented by aspects of the vehicle 100 as described with reference to Figs. 1-9. For example, the sensor operation 1000 may include a camera 812 as described with reference to Fig. 8. While discussed as a camera, the camera 812 may be generally referred to as a sensor as described with reference to Figs. 1-3C.

In some examples, the camera 812 includes a plurality of unit cells 1004, also referred to herein as pixels 1004, that are arranged in a pixel array for the camera 812. Details of the unit pixels 1004 will be described later. For example, each of the unit pixels 1004 includes a photoelectric conversion element such as a photodiode, and a circuit that generates a pixel signal of a voltage value corresponding to the amount of charge generated in the photoelectric conversion element, hereinafter, referred to as a pixel circuit. Moreover, the pixel circuit may include an imaging signal generation circuit. Each photoelectric conversion element can be associated with a respective pixel circuit, or multiple photoelectric conversion elements can be associated with a common pixel circuit.

In this example, the plurality of unit pixels 1004 are arranged in the pixel array in a two-dimensional lattice shape. The plurality of unit pixels 1004 may be grouped into a plurality of pixel blocks or groups, each including a predetermined number of unit pixels. Hereinafter, an assembly of unit pixels which are arranged in a horizontal direction is referred to as a "row", and an assembly of unit pixels which are arranged in a direction orthogonal to the row is referred to as a "column".

Each of the unit pixels 1004 generates charges corresponding to an amount of light received at the respective photoelectric conversion element. The unit pixels 1004 within the pixel array unit of the camera 812 may be disposed in one or more pixel groups 1008. In the configuration illustrated in Fig. 10, for example, the pixel array unit of the camera 812 is constituted by pixel groups 1008 that include an assembly of unit pixels 1004 that receive wavelength components necessary to reconstruct color information from a scene. For example, in the case of reconstructing a color on the basis of three primary colors of red, green, and blue (RGB), in the pixel array unit of the camera 812, optical color filter materials can be deposited onto the pixels according to a predetermined color filter array to control light of desired wavelengths to reach a pixel surface. Specifically, a unit pixel 1004 that receives light of a red (R) color, a unit pixel 1004 that receives light of a green (G) color, and a unit pixel 1004 that receives light of a blue (B) color are arranged in pixel groups 1008 according to the predetermined color filter array.

Examples of the color filter array configurations include various arrays or pixel groups such as a Bayer array of 2 × 2 pixels, a color filter array of 3 × 3 pixels which is employed in an X-Trans (registered trademark) CMOS sensor (hereinafter, also referred to as "X-Trans (registered trademark) type array"), a Quad Bayer array of 4 × 4 pixels (also referred to as "Quadra array"), and a color filter of 4 × 4 pixels in which a white RGB color filter is combined to the Bayer array (hereinafter, also referred to as "white RGB array"). Other possible 2x2 color filter array configurations include red, clear, clear, blue (RCCB); red, clear, clear, clear (RCCC); red, yellow, yellow, cyan (RYYCy); and red, green, blue, IR (RGBIR).

As shown, the unit pixels 1004 in the case of employing pixel groups 1008 with an arrangement of unit pixels 1004 and associated color filters in the color filter array can be configured to form a plurality of Bayer arrays. In the case of employing the Bayer array as the color filter array configuration, in the pixel array of the camera 812, a basic pattern for the pixel group 1008 including a total of four unit pixels 1004 of 2 × 2 pixels is repetitively arranged in a column direction and a row direction. For example, the basic pattern for the pixel group 1008 is constituted by a unit pixel 1012R including a color filter of a red (R) color, a unit pixel 1012Gr including a color filter of a green (Gr) color, a unit pixel 1012Gb including a color filter of a green (Gb) color, and a unit pixel 1012B including a color filter of a blue (B) color.

In some examples, time of flight (ToF) pixels 1016 can be interspersed or included within the pixel array of the camera 812. The ToF pixels 1016 may be provided as dedicated pixels used for detecting depth. A ToF pixel 1016 may include a filter for passing wavelengths of light that are emitted by the light sources 808 for the purpose of detecting distance to an object. For example, if the one or more of the light sources 808 are capable of emitting infrared light or near infrared light, then a ToF pixel 1016 may include a filter that passes infrared light or near infrared light while blocking other wavelengths of light. However, example embodiments are not limited thereto, and other filters may be used depending on the wavelength of light being detected for the purpose of determining a distance to an object (e.g., a white color filter). As may be appreciated, pixel arrays that include ToF pixels 1016 are useful for operating the light sources 808 and the cameras 812 in the first and second modes simultaneously.

As part of the second mode and third function as described with reference to Fig. 8, a controller 804 of a vehicle 100 can control at least some of the pixels 1004 of the camera 812 (e.g., a sensor) to operate to obtain timing information regarding the receipt of light generated by a light source (e.g., a light source 808 as described with reference to Figs. 8-9) and reflected from an object or surface within a scene surrounding the vehicle 100.

Additionally or alternatively, the controller may control the pixels 1004 of the camera 812 to operate according to the first mode and second function as described with reference to Fig. 8, where the pixels 1004 operate normally and capture the wavelength components necessary to reconstruct color information from the scene. Accordingly, the controller can also control one or more of the pixels 1004 of the camera 812 to act as a ToF pixel when the second mode and third function are implemented or activated, and the ToF pixels 1016 will then monitor for and receive light emitted from a light source (e.g., from a subset 908 of individual lights 904 of the light source as described with reference to Fig. 9) to assist in ToF determinations for gathering depth data for the scene surrounding the vehicle 100.

As mentioned above, the ToF pixels 1016 may sense different types of light such as IR light or other types of non-visible lights, than emitted from the light source as part of a first mode (e.g., visible wavelengths of light) as described with reference to Fig. 8. Subsequently, the controller and/or the ToF pixels 1016 can obtain the timing information regarding the receipt of the light generated by the light source and reflected from an object or surface within the scene surrounding the vehicle 100, where the timing information is used for the ToF determinations and depth data generation (e.g., ToF depth image). That is, pixels 1004 within the pixel array of the camera 812 receive light that is reflected from an object (e.g., reflected light 824 as described with reference to Fig. 8). Subsequently, the controller 804 calculates distance information for each ToF pixel 1016 according to the time elapsed between the emitted light and the received light, generates a depth image in which the distance to the object is represented by a depth value for each pixel, and outputs the depth image.

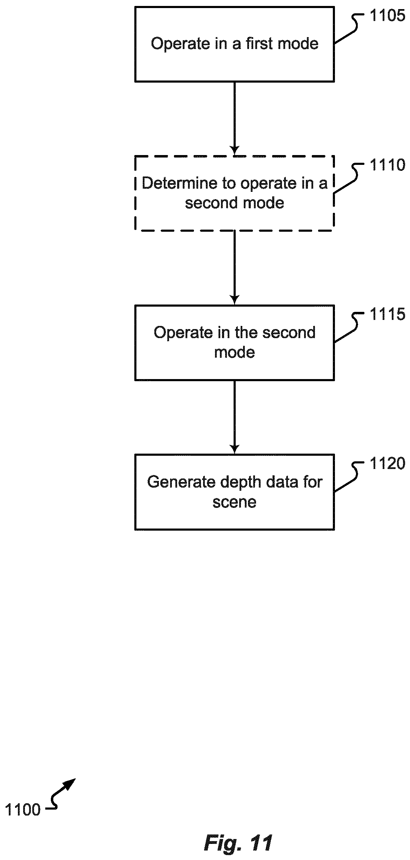

Fig. 11 is a flowchart 1100 that illustrates aspects of the operation of a vehicle 100 in accordance with embodiments of the present disclosure. For example, a controller of the vehicle 100 (e.g., the controller 804 as described with reference to Fig. 8) may perform the operations as illustrated in the flowchart 1100 to assist in performing ToF determinations using passive sensors (e.g., automotive cameras) and existing light sources on the vehicle 100.

At operation 1105, the controller may operate in a first mode. In some examples, the first mode includes the controller controlling at least one light source of the vehicle 100 to provide a first function and controlling at least one camera (e.g., passive sensor) of the vehicle 100 to provide a second function. The first function performed by the at least one light source may include the at least one light source illuminating a scene surrounding the vehicle 100 using visible wavelengths of light emitted from the light source. Additionally, the second function performed by the at least one camera may include the at least one camera capturing image data for the scene, where the image data is used to generate a color image of the scene.

In some embodiments, at operation 1110, the controller may determine to operate in a second mode. For example, the controller may determine to operate in the second mode based on the vehicle 100 being operated in a particular vehicle control and/or operation mode (e.g., different levels of autonomy described with reference to Fig. 1), the vehicle 100 performing a specific task (e.g., parking, reversing, turning, etc.), or another trigger event where the vehicle 100 would benefit from performing ToF calculations and gathering depth data for the scene surrounding the vehicle 100.

At operation 1115, the controller may operate in the second mode. In some examples, the controller begins operating in the second mode based on the determination at operation 1110. Additionally or alternatively, the controller may operate in the first mode and the second mode continuously. In either case, the controller is capable of operating in the first mode and the second mode simultaneously. As part of the second mode, the controller may control the at least one light source and the at least one camera to provide a third function, where the first, second, and third functions are different from one another. For example, the third function may include the controller controlling the at least one light source and the at least one camera to generate depth data for the scene surrounding the vehicle 100 using light emitted from the at least one light source and reflected from the scene (e.g., objects from the scene) back to the at least one camera as described with reference to Figs. 8-10, where the depth data is used to generate a depth image of the scene (e.g., a ToF depth image). Accordingly, the controller may transmit signaling to the at least one light source and the at least one camera to perform the third function as part of the second mode.

At operation 1120, the controller may generate the depth data based on operating in the second mode and the third function performed by the at least one light source and the at least one camera. For example, the depth data is generated based on the controller and/or camera timing how long it takes for the light emitted from the at least one light source to be reflected from the scene and received at the at least one camera. This timing can then be used as part of ToF calculations described herein (e.g., Equations 1 and 2 provided previously) to generate the depth data and the depth image of the scene. In some examples, the at least one light source includes multiple light sources (e.g., multiple LEDs or individual lights as described with reference to Fig. 9) that the controller controls to emit light with different properties, where the depth data includes data generated based on reflected light having the different properties so that the depth image can be generated as an HDR depth image. For example, the different properties may correspond to different intensities of light, different frequencies, different wavelengths, etc. Additionally, the at least one camera may include multiple cameras, and the controller may control the at least one light source and the multiple cameras to expand a field of view of the depth image.

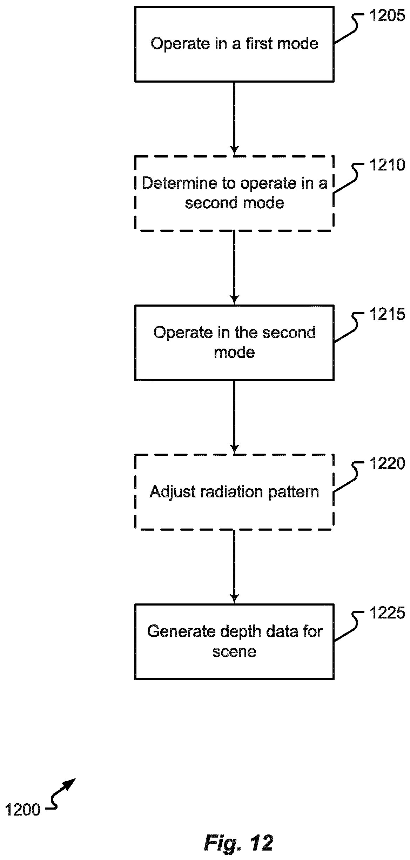

Fig. 12 is a flowchart 1200 that illustrates aspects of the operation of a vehicle 100 in accordance with embodiments of the present disclosure. For example, a controller of the vehicle 100 (e.g., the controller 804 as described with reference to Fig. 8) may perform the operations as illustrated in the flowchart 1200 to assist in performing ToF determinations using passive sensors (e.g., automotive cameras) and existing light sources on the vehicle 100. Additionally, some operations shown in the flowchart 1200 are the same or similar to the operations as described with reference to Fig. 11. For example, operations 1205, 1210, 1215, and 1225 of the flowchart 1200 may correspond to operations 1105, 1110, 1115, and 1120, respectively, of the flowchart 1100 as described with reference to Fig. 11.

In some examples, at operation 1220, in addition to the operations described with reference to the flowchart 1100, the controller of the vehicle 100 may control a radiation pattern of the at least one light source to vary based on a speed of the vehicle. For example, the controller may control the radiation pattern of the at least one light source to be narrower as the speed of the vehicle 100 increases (e.g., or at higher speeds of the vehicle 100) and to be wider as the speed of the vehicle 100 decreases (e.g., or at lower speeds of the vehicle 100). This actuation or adjustment of the at least one light source may enable the controller and/or at least one camera to collect depth and angular position information (e.g., as part of generating the depth data for the scene at operation 1225) at a higher resolution based on the driving speed of the vehicle 100. Additionally or alternatively, the vehicle 100 may use small and large field of view cameras for detecting different parts of the scene surrounding the vehicle 100.

Any of the steps, functions, and operations discussed herein can be performed continuously and automatically.

The exemplary systems and methods of this disclosure have been described in relation to vehicle systems and electric vehicles. However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should, however, be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components of the system can be combined into one or more devices, such as a server, communication device, or collocated on a particular node of a distributed network, such as an analog and/or digital telecommunications network, a packet-switched network, or a circuit-switched network. It will be appreciated from the preceding description, and for reasons of computational efficiency, that the components of the system can be arranged at any location within a distributed network of components without affecting the operation of the system.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

While the flowcharts have been discussed and illustrated in relation to a particular sequence of events, it should be appreciated that changes, additions, and omissions to this sequence can occur without materially affecting the operation of the disclosed embodiments, configuration, and aspects.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed generalpurpose computer with the cooperation of a controller and memory, a special purpose computer, a microprocessor, or the like. In these instances, the systems and methods of this disclosure can be implemented as a program embedded on a personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and/or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

Embodiments include a system comprising at least one light source that provides a first function for a vehicle, at least one camera that provides a second function for the vehicle, and a controller configured to operate in a first mode and a second mode. The first mode is a mode in which the controller is configured to control the at least one light source to provide the first function and the at least one camera to provide the second function. Additionally or alternatively, the second mode is a mode in which the controller is configured to control the at least one light source and the at least one camera to provide a third function for the vehicle. The first, second, and third functions are different from one another.

In aspects of the above system, the third function includes the controller controlling the at least one light source and the at least one camera to generate depth data for a scene surrounding the vehicle using light emitted from the at least one light source and reflected from the scene back to the at least one camera, where the depth data is used to generate a depth image of the scene.

In aspects of the above system, the first function includes the controller controlling the at least one light source to illuminate the scene using visible wavelengths of the light emitted from the light source.

In aspects of the above system, the second function includes the controller controlling the at least one camera to capture image data for the scene, the image data being used to generate a color image of the scene.

Aspects of the above system include the controller operating in the first mode and the second mode simultaneously.

In aspects of the above system, the at least one light source includes multiple light sources that the controller controls to emit light with different properties, where the depth data includes data generated based on reflected light having the different properties so that the depth image is an HDR depth image. For example, the different properties correspond to different intensities of light.

In aspects of the above system, the at least one camera includes multiple cameras, and the controller controls the at least one light source and the multiple cameras to expand a field of view of the depth image.

Aspects of the above system include the controller controlling a radiation pattern of the at least one light source to vary based on a speed of the vehicle. For example, the controller controls the radiation pattern of the at least one light source to be narrower as the speed of the vehicle increases and to be wider as the speed of the vehicle decreases.

Embodiments further include a device comprising a controller configured to operate in a first mode and a second mode. The first mode is a mode in which the controller is configured to control at least one light source of a vehicle to provide a first function for the vehicle and at least one camera to provide a second function for the vehicle. Additionally or alternatively, the second mode is a mode in which the controller is configured to control the at least one light source and the at least one camera to provide a third function for the vehicle. The first, second, and third functions are different from one another.

In aspects of the above device, the third function includes the controller controlling the at least one light source and the at least one camera to generate depth data for a scene surrounding the vehicle using light emitted from the at least one light source and reflected from the scene back to the at least one camera, where the depth data is used to generate a depth image of the scene.

In aspects of the above device, the first function includes the controller controlling the at least one light source to illuminate the scene using visible wavelengths of the light emitted from the light source.

In aspects of the above device, the second function includes the controller controlling the at least one camera to capture image data for the scene, the image data being used to generate a color image of the scene.

Aspects of the above device include the controller operating in the first mode and the second mode simultaneously.

In aspects of the above device, the at least one light source includes multiple light sources that the controller controls to emit light with different properties, where the depth data includes data generated based on reflected light having the different properties so that the depth image is an HDR depth image. For example, the different properties correspond to different intensities of light.

In aspects of the above device, the at least one camera includes multiple cameras, and the controller controls the at least one light source and the multiple cameras to expand a field of view of the depth image.

Aspects of the above device include the controller controlling a radiation pattern of the at least one light source to vary based on a speed of the vehicle. For example, the controller controls the radiation pattern of the at least one light source to be narrower as the speed of the vehicle increases and to be wider as the speed of the vehicle decreases.

Embodiments include a vehicle comprising at least one light source that provides a first function for the vehicle, at least one camera that provides a second function for the vehicle, and a controller configured to operate in a first mode and a second mode. The first mode is a mode in which the controller is configured to control the at least one light source to provide the first function and the at least one camera to provide the second function. Additionally or alternatively, the second mode is a mode in which the controller is configured to control the at least one light source and the at least one camera to provide a third function for the vehicle. The first, second, and third functions are different from one another.

In aspects of the above vehicle, the third function includes the controller controlling the at least one light source and the at least one camera to generate depth data for a scene surrounding the vehicle using light emitted from the at least one light source and reflected from the scene back to the at least one camera, where the depth data is used to generate a depth image of the scene.

In aspects of the above vehicle, the first function includes the controller controlling the at least one light source to illuminate the scene using visible wavelengths of the light emitted from the light source.

In aspects of the above vehicle, the second function includes the controller controlling the at least one camera to capture image data for the scene, the image data being used to generate a color image of the scene.

Aspects of the above vehicle include the controller operating in the first mode and the second mode simultaneously.

In aspects of the above vehicle, the at least one light source includes multiple light sources that the controller controls to emit light with different properties, where the depth data includes data generated based on reflected light having the different properties so that the depth image is an HDR depth image. For example, the different properties correspond to different intensities of light.

In aspects of the above vehicle, the at least one camera includes multiple cameras, and the controller controls the at least one light source and the multiple cameras to expand a field of view of the depth image.

Aspects of the above vehicle include the controller controlling a radiation pattern of the at least one light source to vary based on a speed of the vehicle. For example, the controller controls the radiation pattern of the at least one light source to be narrower as the speed of the vehicle increases and to be wider as the speed of the vehicle decreases.

Any one or more of the aspects/embodiments as substantially disclosed herein.

Any one or more of the aspects/embodiments as substantially disclosed herein optionally in combination with any one or more other aspects/embodiments as substantially disclosed herein.

One or more means adapted to perform any one or more of the above aspects/embodiments as substantially disclosed herein.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware, an embodiment that is entirely software (including firmware, resident software, micro-code, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, IR, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

The term "electric vehicle" (EV), also referred to herein as an electric drive vehicle, may use one or more electric motors or traction motors for propulsion. An electric vehicle may be powered through a collector system by electricity from offvehicle sources or may be self-contained with a battery or generator to convert fuel to electricity. An electric vehicle generally includes a rechargeable electricity storage system (RESS) (also called Full Electric Vehicles (FEV)). Power storage methods may include: chemical energy stored on the vehicle in on-board batteries (e.g., battery electric vehicle or BEV), on board kinetic energy storage (e.g., flywheels), and/or static energy (e.g., by on-board double-layer capacitors). Batteries, electric double-layer capacitors, and flywheel energy storage may be forms of rechargeable on-board electrical storage.

The term "hybrid electric vehicle" refers to a vehicle that may combine a conventional (usually fossil fuel-powered) powertrain with some form of electric propulsion. Most hybrid electric vehicles combine a conventional internal combustion engine (ICE) propulsion system with an electric propulsion system (hybrid vehicle drivetrain). In parallel hybrids, the ICE and the electric motor are both connected to the mechanical transmission and can simultaneously transmit power to drive the wheels, usually through a conventional transmission. In series hybrids, only the electric motor drives the drivetrain, and a smaller ICE works as a generator to power the electric motor or to recharge the batteries. Power-split hybrids combine series and parallel characteristics. A full hybrid, sometimes also called a strong hybrid, is a vehicle that can run on just the engine, just the batteries, or a combination of both. A mid hybrid is a vehicle that cannot be driven solely on its electric motor, because the electric motor does not have enough power to propel the vehicle on its own.

The term "rechargeable electric vehicle" or "REV" refers to a vehicle with on board rechargeable energy storage, including electric vehicles and hybrid electric vehicles.

The present invention alternatively and/or additionally relates to the following aspects:

1. A system, comprising:

at least one light source (118) that provides a first function for a vehicle (100);
at least one camera (116) that provides a second function for the vehicle (100); and
a controller (804) configured to operate in a first mode and a second mode, the first mode being a mode in which the controller (804) is configured to control the at least one light source (118) to provide the first function and the at least one camera (116) to provide the second function, the second mode being a mode in which the controller (804) is configured to control the at least one light source (118) and the at least one camera (116) to provide a third function for the vehicle (100), wherein the first, second, and third functions are different from one another.

2. The system of aspect 1, wherein the third function includes the controller (804) controlling the at least one light source (118) and the at least one camera (116) to generate depth data for a scene surrounding the vehicle (100) using light emitted from the at least one light source (118) and reflected from the scene back to the at least one camera (116), the depth data being used to generate a depth image of the scene.

3. The system of aspect 1 or 2, wherein the first function includes the controller (804) controlling the at least one light source (118) to illuminate the scene using visible wavelengths of the light emitted from the light source.

4. The system of aspect 1, 2 or 3, wherein the second function includes the controller (804) controlling the at least one camera (116) to capture image data for the scene, the image data being used to generate a color image of the scene.

5. The system of any one of aspects 1 to 4, wherein the controller (804) operates in the first mode and the second mode simultaneously.

6. The system of any one of aspects 1 to 5, wherein the at least one light source (118) includes multiple light sources that the controller (804) controls to emit light with different properties, wherein the depth data includes data generated based on reflected light having the different properties so that the depth image is a high dynamic range (HDR) depth image.

7. The system of aspect 6, wherein the different properties correspond to different intensities of light.

8. The system of any one of aspects 2 to 7, wherein the at least one camera includes multiple cameras, and wherein the controller controls the at least one light source and the multiple cameras to expand a field of view of the depth image.

9. The system of any one of aspects 2 to 8, wherein the controller (804) controls a radiation pattern of the at least one light source (118) to vary based on a speed of the vehicle (100).

10. The system of aspect 9, wherein the controller (804) controls the radiation pattern of the at least one light source (118) to be narrower as the speed of the vehicle (100) increases and to be wider as the speed of the vehicle (100) decreases.

11. A device, comprising:

a controller (804) configured to operate in a first mode and a second mode, the first mode being a mode in which the controller (804) is configured to control:

at least one light source (118) of a vehicle (100) to provide a first function for the vehicle (100); and
at least one camera (116) to provide a second function for the vehicle (100),

the second mode being a mode in which the controller (804) is configured to control:
the at least one light source (118) and the at least one camera (116) to provide a third function for the vehicle (100), wherein the first, second, and third functions are different from one another.

12. The device of aspect 11, wherein the third function includes the controller (804) controlling the at least one light source (118) and the at least one camera (116) to generate depth data for a scene surrounding the vehicle (100) using light emitted from the at least one light source (118) and reflected from the scene back to the at least one camera (116), the depth data being used to generate a depth image of the scene.

13. The device of claim 12, wherein the first function includes the controller (804) controlling the at least one light source (118) to illuminate the scene using visible wavelengths of the light emitted from the light source.

14. The device of claim 13, wherein the second function includes the controller (804) controlling the at least one camera (116) to capture image data for the scene, the image data being used to generate a color image of the scene.

15. The device of claim 11, wherein the controller (804) operates in the first mode and the second mode simultaneously.

16. The device of aspect 12, wherein the at least one light source (118) includes multiple light sources that the controller (804) controls to emit light with different properties, wherein the depth data includes data generated based on reflected light having the different properties so that the depth image is a high dynamic range (HDR) depth image.

17. The device of claim 16, wherein the different properties correspond to different intensities of light.

18. The device of any one of aspects 12 - 17, wherein the at least one camera includes multiple cameras, and wherein the controller controls the at least one light source and the multiple cameras to expand a field of view of the depth image.

19. The device of any one of aspects 12 to 18, wherein the controller (804) controls a radiation pattern of the at least one light source (118) to be narrower as a speed of the vehicle (100) increases and to be wider as the speed of the vehicle (100) decreases.

20. A vehicle, comprising:

at least one light source that provides a first function for the vehicle;
at least one camera that provides a second function for the vehicle; and
a controller configured to operate in a first mode and a second mode, the first mode being a mode in which the controller is configured to control the at least one light source to provide the first function and the at least one camera to provide the second function, the second mode being a mode in which the controller is configured to control the at least one light source and the at least one camera to provide a third function for the vehicle, wherein the first, second, and third functions are different from one another.

**Claims**

1. A system, comprising:

   at least one light source (118) that provides a first function for a vehicle (100);
   at least one camera (116) that provides a second function for the vehicle (100); and
   a controller (804) configured to operate in a first mode and a second mode, the first mode being a mode in which the controller (804) is configured to control the at least one light source (118) to provide the first function and the at least one camera (116) to provide the second function, the second mode being a mode in which the controller (804) is configured to control the at least one light source (118) and the at least one camera (116) to provide a third function for the vehicle (100), wherein the first, second, and third functions are different from one another.

2. The system of claim 1, wherein the third function includes the controller (804) controlling the at least one light source (118) and the at least one camera (116) to generate depth data for a scene surrounding the vehicle (100) using light emitted from the at least one light source (118) and reflected from the scene back to the at least one camera (116), the depth data being used to generate a depth image of the scene.

3. The system of claim 2, wherein the first function includes the controller (804) controlling the at least one light source (118) to illuminate the scene using visible wavelengths of the light emitted from the light source.

4. The system of claim 2, or 3, wherein the second function includes the controller (804) controlling the at least one camera (116) to capture image data for the scene, the image data being used to generate a color image of the scene.

5. The system of any one of claims 1 to 4, wherein the controller (804) operates in the first mode and the second mode simultaneously.

6. The system of any one of claims 2 to 5, wherein the at least one light source (118) includes multiple light sources that the controller (804) controls to emit light with different intensities of light.

7. The system of any one of claims 2 to 6, wherein the controller (804) controls a radiation pattern of the at least one light source (118) to vary based on a speed of the vehicle (100).

8. The system of claim 7, wherein the controller (804) controls the radiation pattern of the at least one light source (118) to be narrower as the speed of the vehicle (100) increases and to be wider as the speed of the vehicle (100) decreases.

9. A device, comprising:
   a controller (804) configured to operate in a first mode and a second mode, the first mode being a mode in which the controller (804) is configured to control:

   at least one light source (118) of a vehicle (100) to provide a first function for the vehicle (100); and
   at least one camera (116) to provide a second function for the vehicle (100), the second mode being a mode in which the controller (804) is configured to control:
   the at least one light source (118) and the at least one camera (116) to provide a third function for the vehicle (100), wherein the first, second, and third functions are different from one another.

10. The device of claim 9, wherein the third function includes the controller (804) controlling the at least one light source (118) and the at least one camera (116) to generate depth data for a scene surrounding the vehicle (100) using light emitted from the at least one light source (118) and reflected from the scene back to the at least one camera (116), the depth data being used to generate a depth image of the scene.

11. The device of claim 9 or 10, wherein the first function includes the controller (804) controlling the at least one light source (118) to illuminate the scene using visible wavelengths of the light emitted from the light source.

12. The device of any one of claims 9 to 11, wherein the second function includes the controller (804) controlling the at least one camera (116) to capture image data for the scene, the image data being used to generate a color image of the scene.

**13.** The device of claim 11, wherein the controller (804) operates in the first mode and the second mode simultaneously.

**14.** The device of any one of claims 9 to 13, wherein the at least one light source (118) includes multiple light sources that the controller (804) controls to emit light with different intensities of light.

**15.** The device of any one of claims 9 to 14, wherein the controller (804) controls a radiation pattern of the at least one light source (118) to be narrower as a speed of the vehicle (100) increases and to be wider as the speed of the vehicle (100) decreases.

*Fig. 1*

**Fig. 2**

Fig. 3A

EP 4 206 737 A1

*Fig. 3B*

Interior Sensors 337

Oxygen/Air Sensor(s) 301

Temperature Sensor(s) 303

Humidity Sensor(s) 305

Light/Photo Sensor(s) 307

Wireless Network Sensor(s) 315

Infrared Sensor(s) 309

Motion Sensor(s) 311

Weight Sensor(s) 313

Restraint Sensor(s) 331

Associated Device(s) Sensors 323

Biometric Sensor(s) 317

Camera Sensor(s) 319

Orientation Sensor(s) 329

Audio Sensor(s) 321

Mechanical Motion Sensor(s) 327

Force Sensor(s) 325

• • •

**Fig. 3C**

**Fig. 4**

EP 4 206 737 A1

Communications Subsystem – Including Wireless
Radio Components
(Cellular (4G/LTE/5G, etc), Bluetooth®, etc)

504

5

350

| Interleaver / Deinterleaver 508 | MAC Circuitry 522 | GPU 540 | Accelerator 544 |

552

| Analog Front End (AFE) 512 | Modulator / Demodulator 524 | Encoder / Decoder 528 | Mux/DeMux |

Bus Manager

| Memory / Storage/Cache 516 | Controller / Microprocessor 520 |

574

| Charging Connectivity Manager 534 | Vehicle Database Connectivity Manager 558 | Transmitter 570 |

| Remote Operating System Connectivity Manager 562 | Sensor Connectivity Manager 566 | Receiver 572 |

| Wi-Fi/BT Wireless PHY Module 580 | Wi-Fi/BT Wireless MAC Module 584 | Transmitter 588 | Receiver 592 |

*Fig. 5*

**Fig. 6**

**Fig. 7**

Light Source
808A

Light Source
808B

Light Source
808N

816

Controller
804

820

Camera
812A

824

Camera
812B

Camera
812N

800

**Fig. 8**

Fig. 9

Fig. 10

Operate in a first mode — 1105

Determine to operate in a second mode — 1110

Operate in the second mode — 1115

Generate depth data for scene — 1120

1100

*Fig. 11*

*Fig. 12*

Europäisches
Patentamt

European
Patent Office

Office européen
des brevets

# EUROPEAN SEARCH REPORT

Application Number

EP 22 21 5731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/182591 A1 (OSRAM GMBH [DE]) 17 September 2020 (2020-09-17) | 1-6,9-14 | INV. G01S17/89 |
| Y | * abstract; figures 65, 75, 133 * * paragraphs [2235], [2244], [2265] – [2271], [2275], [2350], [2939] * * paragraphs [2946], [5323], [5649], [5689], [5689], [5709] * | 7,8,15 | G01S17/931 |
| Y | US 2017/168146 A1 (BOEHMKE SCOTT [US]) 15 June 2017 (2017-06-15) * abstract; figures 1-3 * * paragraphs [0016], [0017], [0033] – [0035] * | 7,8,15 | |
| A | US 2020/096639 A1 (PANAS ROBERT MATTHEW [US] ET AL) 26 March 2020 (2020-03-26) * abstract; figures 1-3 * * paragraphs [0033], [0045]; claim 11 * | 1-15 | |

TECHNICAL FIELDS
SEARCHED      (IPC)

G01S

The present search report has been drawn up for all claims

| Place of search | Date of completion of the search | Examiner |
|---|---|---|
| Munich | 8 May 2023 | Cordeiro, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 5731

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2023

| Patent document cited in search report | | Publication date | Patent family member(s) | | Publication date |
|---|---|---|---|---|---|
| WO 2020182591 | A1 | 17-09-2020 | CA | 3173966 A1 | 17-09-2020 |
| | | | CN | 113795773 A | 14-12-2021 |
| | | | CN | 114942453 A | 26-08-2022 |
| | | | CN | 114942454 A | 26-08-2022 |
| | | | DE | 112020001131 T5 | 27-01-2022 |
| | | | EP | 3963355 A1 | 09-03-2022 |
| | | | US | 2020284883 A1 | 10-09-2020 |
| | | | US | 2022276351 A1 | 01-09-2022 |
| | | | US | 2022276352 A1 | 01-09-2022 |
| | | | WO | 2020182591 A1 | 17-09-2020 |
| US 2017168146 | A1 | 15-06-2017 | US | 2017168146 A1 | 15-06-2017 |
| | | | US | 2018329067 A1 | 15-11-2018 |
| | | | US | 2020257000 A1 | 13-08-2020 |
| US 2020096639 | A1 | 26-03-2020 | TW | 202012956 A | 01-04-2020 |
| | | | US | 2020096639 A1 | 26-03-2020 |
| | | | WO | 2020068245 A1 | 02-04-2020 |